(19)

Europäisches
Patentamt
European
Patent Office
Office européen
des brevets

(11) **EP 4 542 458 A1**

(12) **EUROPEAN PATENT APPLICATION**

(43) Date of publication:
**23.04.2025 Bulletin 2025/17**

(51) International Patent Classification (IPC):
**G06N 10/60** (2022.01)

(21) Application number: **23383074.4**

(22) Date of filing: **19.10.2023**

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fundación Tecnalia Research & Innovation**
**20009 Donostia - San Sebastián (ES)**

(72) Inventors:
• **VILLAR RODRÍGUEZ, Esther**
  **E-20009 Donostia-San Sebastián (ES)**
• **OSABA ICEDO, Eneko**
  **E-20009 Donostia-San Sebastián (ES)**
• **OREGUI BRAVO, Izaskun**
  **E-20009 Donostia-San Sebastián (ES)**

(74) Representative: **Balder IP Law, S.L.**
**Paseo de la Castellana 93**
**5ª planta**
**28046 Madrid (ES)**

(54) **METHOD FOR SOLVING A QUADRATIC UNCONSTRAINED BINARY OPTIMIZATION SUBPROBLEM**

(57) The invention relates to a method of solving, by a quantum computer, or approximately solving, by a quantum computer, an isomorphic portion (301), according to a first isomorphism relation, of the first PUBO subproblem thereby obtaining solution values or approximate solution values of the variables ($x_1$, $x_2$, $x_3$) of the isomorphic portion of the first PUBO subproblem; wherein the first subproblem is representable by a graph isomorphic, according to the first isomorphism relation, with respect to a graph representing a second PUBO subproblem or the graph representing the first subproblem is approximately isomorphic, according to the first isomorphism relation, with respect to the graph representing the second subproblem; wherein at least some coefficients of the first subproblem are proportional or approximately proportional with respect to coefficients of the second subproblem and the proportional or approximately proportion coefficients are associated with variables associated according to the first isomorphism relation; and wherein the first subproblem and the second subproblem are summands of a PUBO problem.

FIG. 2

EP 4 542 458 A1

**Description**

**TECHNICAL FIELD**

The present invention relates to methods performed by quantum computers.

**BACKGROUND**

It is known that quantum computers perform some processing tasks quicker than other computers, such as classical computers. In particular, it is known the use of quantum computers for solving quadratic unconstrained binary optimization problems quicker than mere classical computing.

Processing capability of a quantum computer is limited by a total number of qubits of the quantum computer. In particular, the total number of qubits of the quantum computer limits a maximum size of a problem which may be solved by the quantum computer. To overcome this limitation, it is known to split relatively large problems into several smaller subproblems, each of the smaller subproblems being small enough for being embeddable in the quantum computer.

It is known that providers of quantum computers have created frameworks for automatically decomposing problems which are too large into smaller subproblems, each of the smaller subproblems fitting the capability of a particular quantum computer. In this way, end users of the quantum computer who use these frameworks do not need to worry about the maximum size of a problem processable by the quantum computer.

As the number of users of quantum computers increases, the demand for quantum computing resources also increases, hence decreasing the amount of quantum computing resources available per user.

It is desirable to further decrease the required time of use of a quantum computer to solve problems, in particular large problems, while allowing solving the problems in a quick manner.

**SUMMARY**

A first aspect of the disclosure relates to a computer-implemented method comprising:

identifying polynomial unconstrained binary optimization subproblems - PUBO subproblems

- within a polynomial unconstrained binary optimization problem - PUBO problem -, a sum of the identified subproblems being the problem or a subproblem of the problem, the identified PUBO subproblems comprising:

a first PUBO subproblem being defined by a first plurality of coefficients and a first plurality of variables, and a second PUBO subproblem being defined by a second plurality of coefficients and a second plurality of variables,
wherein the first subproblem is representable by a first graph having nodes and links joining the nodes, wherein each node of the first graph represents each variable of the first plurality of variables, and each link of the first graph represents each coefficient of the first plurality of coefficients and is associated with the variable(s) of the node(s) linked by the link (wherein coefficients associated with only one variable are represented by a link joining the variable with the same variable, i.e., a self-loop);
wherein the second subproblem is representable by a second graph having nodes and links joining the nodes, wherein each node of the second graph represents each variable of the second plurality of variables, and each link of the second graph represents each coefficient of the second plurality of coefficients and is associated with the variable(s) of the node(s) linked by the link (wherein coefficients associated with only one variable are represented by a link joining the variable with the same variable, i.e., a self-loop);
wherein the first graph is isomorphic, according to a first isomorphism relation, with respect to the second graph or the first graph is approximately isomorphic, according to a first isomorphism relation, with respect to the second graph;
wherein each coefficient of at least two coefficients of the first plurality of coefficients is proportional or approximately proportional to a coefficient of the second plurality of coefficients according to a same first proportion ratio, each coefficient of the at least two coefficients proportional or approximately proportional, according to the first proportion ratio, to the respective coefficient of the second plurality of coefficients is associated with one or more variables (preferably, the coefficient of the at least two coefficients is not associated with any other variable in addition to the one or more variables) represented by one or more nodes of the first graph isomorphic, according to the first isomorphism relation, with respect to one or more nodes of the second graph linked by the link representing the respective coefficient of the second plurality of coefficients;

sending an isomorphic portion, according to the first isomorphism relation, of the first subproblem (i.e., a subproblem represented by an isomorphic portion of the first graph) to a quantum computer, the isomorphic portion comprising the at least two coefficients of the first plurality of coefficients; and

solving, by the quantum computer, or approximately solving, by the quantum computer, the isomorphic portion (e.g., solving or approximately solving the first subproblem) of the first subproblem thereby obtaining solution values or approximate solution values of the variables of the isomorphic portion of the first subproblem.

In the context of the present disclosure and unless otherwise stated, the term "isomorphism" in the context of isomorphic portions of graphs may refer to that each portion of the isomorphic portions has the same number of nodes (i.e., variables), the same number of links (i.e., number of coefficients) and the same link connections (although do not necessarily the same values of coefficients represented by the links). In other words, the term "isomorphism" in the context of isomorphic portions of graphs may refer to a bijection between the nodes of one of the isomorphic portions and the nodes of another one of the isomorphic portions such that:

- any two nodes (i.e., variables) of the one of the portions are adjacent (i.e., linked by a link) in the one of the portions if and only if the nodes of the another one of the portions bijective (according to the bijection) with respect to the two nodes are adjacent (i.e., linked by a link) in the another one of the portions; and
- any node of the one of the portions is linked by a self-loop if and only if the node of the another one of the portions bijective (according to the bijection) with respect to the node of the one of the portions is linked with itself by a self-loop.

Therefore, the isomorphism may be considered as a bijection preserving unweighted edges (i.e., keeping the links but not necessarily the values of the respective coefficients).

Graphs of the present disclosure, unless otherwise stated, do not represent coefficients having a value of zero. In other words, the graphs do not comprise any link for those coefficients having a value of zero. Therefore, the graphs are not necessarily complete graphs.

Thereby, the method allows identifying PUBO subproblems within a larger PUBO problem and taking advantage of isomorphisms among graphs of the PUBO subproblems. Smaller PUBO subproblems may be solved by quantum computers having a relatively low processing capability. In this way, a quantum computer having a relatively low processing capability (e.g., just a few qubits) may solve, at least portions of, complex PUBO subproblems by performing the method.

The PUBO problem may be defined by the following equation:

$$H(\bar{x}) = \sum_{i_1}^{n} J_{i_1} \cdot x_{i_1} + \sum_{i_1, i_2}^{n} J_{i_1 i_2} \cdot x_{i_1} \cdot x_{i_2} + ... + \sum_{i_1, ... i_k}^{n} J_{i_1 i_2 ... i_k} \cdot x_{i_1} \cdot x_{i_2} ... x_{i_k}$$

wherein:

$J_{i1}, J_{i1i2} ... J_{i1i2...ik}$ : are the coefficients of the PUBO problem;
$x$: is a vector comprising the plurality of binary variables ($x_{i1}$, $x_{i2}$, ..., $x_{ik}$) of the PUBO problem; and
$n$: is a total number of the plurality of binary variables of the PUBO problem.

Several PUBO subproblems may be identified within the PUBO problem, wherein each subproblem of the identified PUBO subproblems comprises some of the summands of the PUBO problem:

$$H(\bar{x}) = \sum_{m=1}^{m=z} H_m(\overline{x_m})$$

wherein:

$H_m(\overline{x_m})$: is the m-th PUBO subproblem; and
$\overline{x_m}$: is a vector comprising the m-th plurality of variables (i.e., the plurality of variables of the m-th PUBO subproblem); and
$z$: is a total number of PUBO subproblems within the PUBO problem.

The m-th plurality of variables of each identified PUBO subproblem is a subset of the plurality of variables of the PUBO problem.

Each subproblem of the identified PUBO subproblems may be defined by the equation:

$$H_m(\overline{x_m}) = \sum_{i_{1m}}^{n_{m1}} J_{i_{1m}} \cdot x_{i_{1m}} + \sum_{i_{1m}, i_{2m}}^{n_{m2}} J_{i_{1m}i_{2m}} \cdot x_{i_{1m}} \cdot x_{i_{2m}} + \dots$$

$$+ \sum_{i_{1m}, \dots i_{km}}^{n_{mk}} J_{i_{1m}i_{2m}\dots i_{km}} \cdot x_{i_{1m}} \cdot x_{i_{2m}} \dots x_{i_{km}}$$

wherein:

$J_{i1m}, J_{i1mi2m} \dots J_{i1mi2m \dots ikm}$: are the coefficients of the m-th PUBO subproblem;
$n_{m1}$: is a total number of algebra terms (summands) of the m-th PUBO subproblem, wherein each summand involves only one variable of the m-th PUBO subproblem;
$n_{m2}$: is a total number of algebra terms (summands) of the m-th PUBO subproblem, wherein each summand involves only two variables of the m-th PUBO problem; and
$n_{mk}$: is a total number of algebra terms (summands) of the m-th PUBO subproblem, wherein each summand involves only k variables of the m-th PUBO problem.

The plurality of coefficients of each identified PUBO subproblem is a subset of the coefficients of the PUBO problem, and the total amount of variables of each identified PUBO problem is lower than the total amount of variables of the PUBO problem.

In each identified PUBO subproblem, a coefficient of the plurality of coefficients of the PUBO subproblem associated with a variable of the plurality of variables of the PUBO subproblem is a coefficient multiplying said variable. For example, the coefficient $J_{i1m}$ is associated with variable $x_{i1m}$; the coefficient $J_{i1mi2m}$ is associated with variables $x_{i1m}$ and $x_{i2m}$; and the coefficient $J_{i1mi2m\dots ikm}$ is associated with variables $x_{i1m}$, $x_{i2m}$, ..., $x_{ikm}$.

In some embodiments, the step of identifying PUBO subproblems within the PUBO problem is performed by a classical computer and preferably without using quantum computing. Thereby, the use of quantum computing is further minimized while allowing finding the first and second subproblems relatively quickly.

In some embodiments, each variable of the variables of the problem is associated with an impact value, the impact value being based on the values of the coefficients associated with said variable (preferably, on the values of all the coefficients associated with said variable), for example, such that higher absolute values of the associated coefficients cause a higher impact value; the isomorphic portion of the first subproblem and/or the isomorphic portion of the second subproblem comprises a variable of the problem associated with an impact value of between 80% of the highest impact value of the variables of the problem and the highest impact value of the variables of the problem, preferably comprises a variable of the problem associated with an impact value of between 90% of the highest impact value of the variables of the problem and the highest impact value of the variables of the problem, and more preferably comprises the variable of the problem having the highest impact value. For example, the impact value of each variable may be calculated by summing the absolute values of all the coefficients of the problem associated with the respective variable.

The impact value associated with each variable may be indicative of a weight of the respective variable on the result of the problem (e.g., indicative of how much a result, of the problem, to be minimized is changed by changing the value of the respective variable), the weight being relative to the weights of the rest of the variables of the problem on the result of the problem. Thereby, solving or approximately solving an isomorphic portion comprising a variable of relatively high impact value, allows increasing reliability of the solution values and/or approximate solution values obtained by the method of the first aspect of the disclosure since there is some certainty (i.e., there is a relatively high probability) that the values of the rest of the variables do not have much impact on the solution value or approximate solution value of the variable calculated by using the method of the first aspect of the disclosure.

In some embodiments, the step of identifying comprises identifying the first PUBO subproblem, the second PUBO subproblem and optionally identifying extra PUBO subproblem(s), a sum of the identified subproblems being the problem or a subproblem of the problem; wherein each subproblem of the extra PUBO subproblem(s) is defined by an extra plurality of coefficients and an extra plurality of variables; wherein each subproblem of the extra PUBO subproblem(s) is representable by a graph having nodes and links joining the nodes, wherein each node of the graph represents each variable of the extra plurality of variables of the respective subproblem, and each link of the graph represents each coefficient of the of the extra plurality of coefficients and is associated with the variable(s) of the node(s) linked by the link; wherein for any extra pair of subproblems of the identified subproblems:

the graph of a subproblem of the extra pair of subproblems is isomorphic, according to an isomorphism relation of the extra pair of subproblems, with respect to the graph of an another subproblem of the extra pair of subproblems or the graph of a subproblem of the extra pair of subproblems is approximately isomorphic, according to an isomorphism relation of the extra pair of subproblems, with respect to the graph of an another subproblem of the extra pair of subproblems;

each coefficient of at least two coefficients of the subproblem of the extra pair of subproblems is proportional or approximately proportional to a coefficient of the another subproblem of the extra pair of subproblems according to a same proportion ratio of the extra pair of subproblems, each coefficient of the at least two coefficients of the subproblem of the extra pair of subproblems proportional or approximately proportional, according to the proportion ratio of the extra pair of subproblems, to the respective coefficient of the another subproblem is associated with one or more variables (preferably, the coefficient of the at least two coefficients is not associated with any other variable in addition to the one or more variables) represented by one or more nodes of the graph of the subproblem isomorphic, according to the isomorphism relation of the extra pair of subproblems, with respect to one or more nodes of the graph of the another subproblem linked by the link representing the respective coefficient of the another subproblem of the extra pair of subproblems;

preferably, wherein an isomorphic portion of the subproblem of the extra pair of subproblems comprises the at least two coefficients of the subproblem of the extra pair of subproblems and does not comprise any variable of the isomorphic portion of the another subproblem of the extra pair of subproblems, and wherein a total amount of variables of the isomorphic portion of the subproblem of the extra pair of subproblems is equal to a total amount of variables of the isomorphic portion of the another subproblem of the extra pair of subproblems;

wherein the step of solving, by a quantum computer, or approximately solving, by a quantum computer, the isomorphic portion comprises solving by using less qubits of the quantum computer than the total amount of qubits of the quantum computer Thereby, by using less qubits than the total amount of qubits of the quantum computer, solution values or approximate solution values of the variables of the isomorphic portion of the first graph may be obtained.

The isomorphic portion of the first subproblem is solved (or approximately solved) by finding values of the variables represented by isomorphic nodes of the first graph, the values minimizing a value of $H_1(\overline{x_1})$. In some embodiments, solving (or approximately solving) the isomorphic portion involves finding appropriate values for each variable of the first plurality of variables. In some embodiments, the method comprises solving or approximately solving the isomorphic portion of the second subproblem based on the first isomorphism relation and on the solution values or approximate solution values of the variables of the isomorphic portion of the first subproblem, thereby obtaining solution values or approximate solution values of the variables of the isomorphic portion of the second subproblem.

Each identified subproblem may be represented by a graph having nodes and links joining the nodes. Each node of the graph represents each variable of the plurality of variables of the subproblem represented by the graph. Each link of the graph represents each coefficient of the plurality of coefficients of the subproblem represented by the graph. Each link of the graph joins the node(s) representing the variables of the subproblem associated with the coefficient represented by the link (e.g., the node(s) representing the variable(s) multiplied by the coefficient represented by the link). The first subproblem is representable by the first graph, and the second subproblem is representable by the second graph.

In some embodiments, the isomorphic portion of the first subproblem does not comprise any variable of an isomorphic portion, according to the first isomorphism relation, of the second subproblem, and a total amount of variables of the isomorphic portion of the first subproblem is equal to a total amount of variables of the isomorphic portion of the second subproblem.

In some embodiments, the first graph is isomorphic, according to a first isomorphism relation, with respect to the second graph. Therefore, each variable of the first plurality of variables is mapped (e.g., by a bijective function), in a reversable manner, to each variable of the second plurality of variables. Thereby, the isomorphic portion of the first subproblem is the first subproblem itself; and the isomorphic portion of the second subproblem is the second subproblem itself.

In some embodiments, the first graph is approximately isomorphic, according to a first isomorphism relation, with respect to the second graph. In these embodiments, the first subproblem and/or the second subproblem are representable by graphs which are not isomorphic because may comprise one or more links (i.e., coefficients) which do not keep the first isomorphism relation. The first subproblem and/or the second subproblem may comprise one or more coefficients representable by links which do not keep the first isomorphism relation (i.e., coefficient(s) representable by link(s) not within the respective isomorphic portion), the one or more coefficients having a value, relative to the value of the coefficients of the isomorphic portion of the respective subproblem, such that an aggregated impact, of the one or more coefficients represented by links not keeping the first isomorphism relation together with the variables associated with said one or more coefficients, on the solution values of the variables represented by isomorphic nodes has a high probability of being negligible. The skilled person is aware of several techniques (e.g., heuristic techniques) for identifying said approximately isomorphic graphs.

In some embodiments, a determination of whether the first graph is approximately isomorphic, according to the first isomorphism relation, with respect to the second graph is based on:

an aggregated value of the coefficients wherein each coefficient is associated with a variable of the isomorphic portion of the first subproblem and a variable of the non-isomorphic portion of the first subproblem, wherein the aggregated value is relative to an aggregated value of the coefficients of the isomorphic portion of the first subproblem; and/or an aggregated value of the coefficients wherein each coefficient is associated with a variable of the isomorphic portion of the second subproblem and a variable of the non-isomorphic portion of the second subproblem, wherein the aggregated value is relative to an aggregated value of the coefficients of the isomorphic portion of the second subproblem. Thereby, by considering said relative aggregated values, it is possible to heuristically determine whether solution values of variables of the isomorphic portion are affected (or have a high probability of being affected) or are negligibly affected (or have a low probability of being affected) by solution values of variables of a non-isomorphic portion.

In some embodiments, a total number of variables of the first subproblem (i.e., a total number of nodes of the first graph) is equal to a total number of variables of the second subproblem (i.e., a total number of nodes of the second graph).
In some embodiments, the method comprises determining whether to broaden the isomorphic portion of the first subproblem and the isomorphic portion of the second subproblem (thereby broadening the first isomorphism relation) by:

- adding to the isomorphic portion of the first subproblem:

  ◦ a variable (i.e., a node),
  ◦ a coefficient of the problem associated only with the respective added variable,
  ◦ and all coefficient(s) of the problem associated only with the respective added variable and with one or more variables already within the isomorphic portion, and

- adding to the isomorphic portion of the second subproblem:

  ◦ another variable (i.e., a node),
  ◦ a coefficient of the problem associated only with the respective added another variable,
  ◦ and all coefficient(s) of the problem associated only with the respective added another variable and with one or more variables already within the isomorphic portion;

wherein the total amount of the added coefficients(s) associated with the added variable is equal to a total amount of the added coefficient(s) associated with the added another variable;
wherein each coefficient of the added coefficient(s) associated with the added variable is proportional or approximately proportional to a coefficient of the added coefficient(s) associated with the added another variable according to the same first proportion ratio, each coefficient of the added coefficient(s) associated with the added variable proportional or approximately proportional, according to the first proportion ratio, to the respective coefficient of the added coefficient(s) associated with the added another variable is associated with one or more variables (including the added variable) (preferably, the coefficient of the added coefficient(s) associated with the added variable is not associated with any other variable in addition to the one or more variables) represented by one or more nodes of the first graph (including a node representing the added variable) isomorphic, according to the broadened first isomorphism relation, with respect to one or more nodes of the second graph (including a node representing the added another variable) linked by the link representing the respective coefficient of the added coefficient(s) associated with the added another variable;
the determination to broaden the isomorphic portions is performed upon:

- determining (preferably in a heuristic manner, e.g., by trial and error) that there is a high probability that the solution value of the respective added variable and for the broadened isomorphic portion (resulting from adding the respective variable) of the first subproblem is equal to the solution value of the respective added variable and for the problem;
- determining (preferably in a heuristic manner, e.g., by trial and error) that there is a high probability that the solution value of the respective added another variable and for the broadened isomorphic portion (resulting from adding the respective another variable) of the second subproblem is equal to the solution value of the respective added another variable and for the problem.

The broadened first isomorphism relation is an isomorphic relation comprising the first isomorphism relation and additional relation(s).

Broadening the isomorphic portions, without exceeding the capacity of the quantum computer used for solving or approximately solving the isomorphic portion of the first subproblem, is advantageous in the sense that a relatively higher capacity of the quantum computer is used. Sending more variables in each call to the quantum computer allows decreasing a total amount of messages (e.g., calls) between the quantum computer and digital computer(s) used for solving the problem. Decreasing the total amount of calls allows decreasing the latency of the network through which the calls are send/received.

Broadening the isomorphic portions is advantageous in the sense that solution values or approximate solution values of the variables of the broadened isomorphic portion of the first subproblem (i.e., of more variables when compared to the non-broadened isomorphic portion) may be obtained by a quantum computer, and solution values or approximate solution values of the variables of the broadened isomorphic portion of the second subproblem (i.e., of more variables when compared to the non-broadened isomorphic portion) may be obtained by applying the broadened first isomorphism relation to the solution values or approximate solution values of the variables of the broadened isomorphic portion of the first subproblem.

In some embodiments, the determination to broaden the isomorphic portions and not to broaden the isomorphic portions is performed upon comparing a first sum with a second sum, and upon comparing a third sum with a fourth sum; wherein the first sum is a sum of:

- the coefficient associated only with the variable to be added (i.e., the coefficient represented by a self-loop and associated with the variable to be added) and
- all the coefficients associated with the variable to be added and with any variable of the problem not forming part of the isomorphic portion of the first subproblem;

wherein the second sum is a sum of:

- the coefficient associated only with the variable to be added and
- all the coefficients associated with only the variable to be added and with variable(s) of the isomorphic portion of the first subproblem (i.e., the coefficients are represented by links joining only the variable to be added with variable(s) of the isomorphic portion of the first subproblem);

wherein the third sum is a sum of:

- the coefficient associated only with the another variable to be added (i.e., the coefficient represented by a self-loop and associated with the another variable to be added) and
- all the coefficients associated with the another variable to be added and with any variable of the problem not forming part of the isomorphic portion of the second subproblem;

wherein the fourth sum is a sum of:

- the coefficient associated only with the another variable to be added and
- all the coefficients associated only with the another variable to be added and with variable(s) of the isomorphic portion of the second subproblem (i.e., the coefficients are represented by links joining only the another variable to be added with variable(s) of the isomorphic portion of the second subproblem);

and the method comprising:

upon determining that a sign of the first sum is equal to a sign of the second sum, and that a sign of the third sum is equal to a sign of the fourth sum, determining to broaden the isomorphic portions; and
upon determining that:

- the sign of the first sum is different than the sign of the second sum, and that an absolute value of the first sum is higher than an absolute value of the second sum, or that
- the sign of the third sum is different than the sign of the fourth sum, and that an absolute value of the third sum is higher than an absolute value of the fourth sum,

determining not to broaden the isomorphic portions.

Thereby, by performing said comparisons it may be determined whether to broaden the isomorphic portions by adding variables and coefficients to the isomorphic portions.

Each isomorphic portion of the respective subproblem only comprises the variables, of the respective subproblem, representable by the isomorphic nodes and linked by the isomorphic links.

If the sign of the third sum is different than the sign of the fourth sum, and an absolute value of the fourth sum is higher than an absolute value of the third sum, a difference between the absolute value of the fourth sum and the absolute value of the third sum may be compared with a threshold. If the absolute value of the difference is higher than the threshold, then it may be determined to broaden the isomorphic portions. If the absolute value of the difference is lower than the threshold, then it may be determined not to broaden the isomorphic portions.

In some embodiments, the step of solving, by a quantum computer, or approximately solving, by a quantum computer, the isomorphic portion comprises solving a portion of the first subproblem including the isomorphic portion and variables additional to the variables of the isomorphic portion. In this manner, resources are optimized in the sense that the problem sent to the quantum computer for being solved comprises more variables (compared to sending merely the isomorphic portion) and hence the quantum computer provides solution values for more variables.

For example, in some embodiments, the determination (preferably in a heuristic manner, e.g., by trial and error) that there is a high probability that the solution value of the respective added variable and for the broadened isomorphic portion (resulting from adding the respective variable) of the first subproblem is equal to the solution value of the respective added variable and for the problem is positive (e.g., a sign of the first sum is equal to a sign of the second sum) but the determination (preferably in a heuristic manner, e.g., by trial and error) that there is a high probability that the solution value of the respective added another variable and for the broadened isomorphic portion (resulting from adding the respective another variable) of the second subproblem is equal to the solution value of the respective added another variable and for the problem is negative, thus it may be advantageous to solve, by the quantum computer, the isomorphic portion of the first subproblem broadened with the added variable (although said added variable does not keep the isomorphism relation with the second subproblem) in order to increase the number of variables solved in just one iteration of the quantum computer. In other embodiments, merely the isomorphic portion is solved in the step of solving, by a quantum computer, or approximately solving, by a quantum computer, the isomorphic portion. In other words, the quantum computer provides solution values for the variables of the isomorphic portion and does not provide solution values for variables outside of the isomorphic portion.

To be able to solve (or approximately solve) the isomorphic portion of the second subproblem by using solution values (or approximate solutions) of the isomorphic portion of the first subproblem it is required to meet a proportionality condition (e.g., a proportion ratio different from 1:1) in addition to the aforementioned first isomorphism relation. In particular, it is required that:

- each coefficient of at least two coefficients of the first plurality of coefficients is proportional or approximately proportional to a coefficient (i.e., according to a bijective function) of the second plurality of coefficients according to a same first proportion ratio; and that
- each coefficient of the at least two coefficients proportional or approximately proportional, according to the first proportion ratio, to the respective coefficient of the second plurality of coefficients is associated with one or more variables (preferably, the coefficient of the at least two coefficients is not associated with any other variable in addition to the one or more variables) represented by one or more nodes of the first graph isomorphic, according to the first isomorphism relation, with respect to one or more nodes of the second graph linked by the link representing the respective coefficient of the second plurality of coefficients.

In other words, there must be a same (or approximately same) proportion ratio between each coefficient of several coefficients of the first plurality of coefficients and the respective coefficients of the isomorphic portion (according to the first isomorphism relation) of the second graph. In other words, the aforementioned isomorphism relation together with the aforementioned proportionality condition result in a weighed isomorphism in which a proportionality between respective coefficients of isomorphic portions (i.e., a coefficient associated with one or more variables of the isomorphic portion of the first subproblem and a coefficient associated with one or more respective variables of the isomorphic portion of the second subproblem) is preserved. In other words, any first link of the isomorphic portion of the first graph represents a first coefficient proportional or approximately proportional, according to the first proportion ratio, with respect to a second coefficient represented by a second link of the isomorphic portion of the second graph, wherein the first link is isomorphic, according to the first isomorphism relation, with respect to the second link.

Thereby, the second subproblem meets the following conditions:

- the isomorphic portion of the second subproblem has the same number of variables as the isomorphic portion of the first subproblem, and the isomorphic portion of the second subproblem has the same number of coefficients as the isomorphic portion of the second subproblem;
- there is an isomorphism relation:

○ between each node of a subgraph representing the isomorphic portion of the first subproblem and a node of a subgraph representing the isomorphic portion of the second subproblem, and
○ between each link of a subgraph representing the isomorphic portion of the first subproblem and a link of a subgraph representing the isomorphic portion of the second subproblem; and

- each pair of links related by the isomorphism relation represent proportional coefficients according to a same proportion ratio.

The method allows dispensing with the need to solve (or approximately solve), by a quantum computer, both the isomorphic portion of the first PUBO subproblem and the isomorphic portion of the second PUBO subproblem since, for example, values of a solution of the variables of the isomorphic portion of the second PUBO subproblem may be obtained by merely applying the isomorphism relation to the values of a solution of the variables of the isomorphic portion of the first PUBO subproblem. In this way, solving the PUBO problem may require solving fewer PUBO subproblems by a quantum computer. Thereby allowing saving required time of use of a quantum computer, allowing minimizing a required processing load of the quantum computer while allowing a low processing time to solve the second PUBO subproblem, and hence to solve PUBO problem.

In some embodiments, the method comprises solving or approximately solving the isomorphic portion of the second subproblem based on the first isomorphism relation and on the solution values or approximate solution values of the variables of the isomorphic portion, according to the first isomorphism relation, of the first subproblem thereby obtaining solution values or approximate solution values of the variables of the isomorphic portion, according to the first isomorphism relation, of the second subproblem.

The solution values or approximate solution values of the variables of the isomorphic portion of the second subproblem may be obtained by applying the first isomorphism relation to the solution values or approximate solution values of the variables of the isomorphic portion of the first subproblem.

In some embodiments, the isomorphism relation is applied to the solution values or approximate solution values of the variables of the isomorphic portion of the first subproblem (i.e., by applying digital computing), preferably without using quantum computing. Thereby, allowing minimizing use of quantum computing while allowing finding the solution values or approximate solution values of the variables of the isomorphic portion of the second subproblem relatively quickly.

The isomorphism relation is applied by assigning the solution value of a variable represented by a node of the isomorphic portion of the first subproblem to a value of a respective variable represented by an isomorphic node, according to the first isomorphism relation, with respect to the node of the isomorphic portion of the first subproblem.

The isomorphism relation may be stored, for example, in a memory of a classical computer.

In some embodiments, the step of identifying PUBO subproblems further comprises identifying one or more additional subproblems (i.e., in addition to the first and second subproblems), a sum of the identified subproblems being the problem or a subproblem of the problem; wherein each additional subproblem of the one or more additional subproblems:

is defined by an additional plurality of coefficients and an additional plurality of variables, and
is representable by an additional graph having nodes and links joining the nodes, wherein each node of the additional graph represents each variable of the additional plurality of variables, and each link of the additional graph represents each coefficient of the additional plurality of coefficients and is associated with the variable(s) of the node(s) linked by the link;
wherein the first graph is isomorphic, according to a first isomorphism relation, with respect to the additional graph or the first graph is approximately isomorphic, according to a first isomorphism relation, with respect to the additional graph;
wherein each coefficient of at least two coefficients of the first plurality of coefficients is proportional or approximately proportional to a coefficient of the additional plurality of coefficients according to a same additional proportion ratio, each coefficient of the at least two coefficients proportional or approximately proportional, according to the additional proportion ratio, to the respective coefficient of the additional plurality of coefficients is associated with one or more variables (preferably, the coefficient of the at least two coefficients is not associated with any other variable in addition to the one or more variables) represented by one or more nodes of the first graph isomorphic, according to the first isomorphism relation, with respect to one or more nodes of the additional graph linked by the link representing the respective coefficient of the additional plurality of coefficients; and
preferably, wherein the isomorphic portion of the first subproblem does not comprise any variable of the isomorphic portion of the additional subproblem, and wherein a total amount of variables of the isomorphic portion of the first subproblem is equal to a total amount of variables of the isomorphic portion of the additional subproblem.

Thereby, solution values of the isomorphic portion(s) of the one or more additional subproblems may be obtained by applying the first isomorphism relation to the solution values of the isomorphic portion of the first subproblem.

In some embodiments, the step of identifying PUBO subproblems further comprises identifying supplemental subproblems (i.e., in addition to the first and second subproblems), a sum of the identified subproblems being the problem or a subproblem of the problem; the supplemental subproblems comprising:

a first supplemental PUBO subproblem being defined by a first supplemental plurality of coefficients and a first supplemental plurality of variables, and

a second supplemental PUBO subproblem being defined by a second supplemental plurality of coefficients and a second supplemental plurality of variables,

wherein the first supplemental subproblem is representable by a first supplemental graph having nodes and links joining the nodes, wherein each node of the first supplemental graph represents each variable of the first supplemental plurality of variables, and each link of the first supplemental graph represents each coefficient of the first supplemental plurality of coefficients and is associated with the variable(s) of the node(s) linked by the link;

wherein the second supplemental subproblem is representable by a second supplemental graph having nodes and links joining the nodes, wherein each node of the second supplemental graph represents each variable of the second supplemental plurality of variables, and each link of the second supplemental graph represents each coefficient of the second supplemental plurality of coefficients and is associated with the variable(s) of the node(s) linked by the link;

wherein the first supplemental graph is isomorphic, according to a supplemental isomorphism relation, with respect to the second supplemental graph or the first supplemental graph is approximately isomorphic, according to a supplemental isomorphism relation, with respect to the second supplemental graph;

wherein each coefficient of at least two coefficients of the first supplemental plurality of coefficients is proportional or approximately proportional to a coefficient of the second supplemental plurality of coefficients according to a same supplemental proportion ratio, each coefficient of the at least two coefficients proportional or approximately proportional, according to the supplemental proportion ratio, to the respective coefficient of the second plurality of coefficients is associated with one or more variables (preferably, the coefficient of the at least two coefficients is not associated with any other variable in addition to the one or more variables) represented by one or more nodes of the first supplemental graph isomorphic, according to the supplemental isomorphism relation, with respect to one or more nodes of the second supplemental graph linked by the link representing the respective coefficient of the second supplemental plurality of coefficients;

sending an isomorphic portion, according to the supplemental isomorphism relation, of the first supplemental subproblem to a quantum computer, the isomorphic portion comprising the at least two coefficients of the first supplemental plurality of coefficients;

preferably, wherein the isomorphic portion of the first supplemental subproblem does not comprise any variable of the isomorphic portion of the second supplemental subproblem, and wherein a total amount of variables of the isomorphic portion of the first supplemental subproblem is equal to a total amount of variables of the isomorphic portion of the second supplemental subproblem; and

solving, by a quantum computer, or approximately solving, by a quantum computer, the isomorphic portion, according to the supplemental isomorphism relation, of the first supplemental subproblem thereby obtaining solution values or approximate solution values of the variables of the isomorphic portion, according to the supplemental isomorphism relation, of the first supplemental subproblem.

Thereby, two groups of subproblems are identified: a first group comprising the first subproblem and the second subproblem, wherein the first subproblem comprises a portion which is isomorphic, according to the first isomorphism relation, with respect to a portion of the second subproblem; and a second group comprising the first supplemental subproblem and the second supplemental subproblem, wherein the first supplemental subproblem comprises a portion which is isomorphic, according to the supplemental isomorphism relation (which is different than the first isomorphism relation), with respect to a portion of the second supplemental subproblem. In this way, solution values or approximate solution values of the variables of the isomorphic portion of the second supplemental subproblem may be obtained by applying the supplemental isomorphism relation to the solution values obtained for the variables of the isomorphic portion of the first supplemental subproblem.

In some embodiments, the polynomial unconstrained binary optimization problem is a quadratic unconstrained binary optimization problem - QUBO problem -, the first subproblem is a quadratic unconstrained binary optimization subproblem - QUBO subproblem - and the second subproblem is a quadratic unconstrained binary optimization subproblem - QUBO subproblem -.

These embodiments are of particular interest because current quantum computing techniques rely on transforming higher-order unconstrained binary optimization problems - HUBO problems - into QUBO problems (for example, by using one or more ancilla variables, wherein each ancilla variable is an operation of several variables of the HUBO problem). The QUBO problems are subsequently solved by quantum computing for obtaining solution values of the respective PUBO problem. In general, the QUBO problems solved by quantum computing are QUSO problems (i.e., QUBO problems comprising binary variables which may take value -1 or 1).

It has been found that it is advantageous to transform a HUBO problem into one or more QUBO problems and then perform the method of the first aspect of the disclosure on at least one of the one or more QUBO problems instead of performing the method of the first aspect of the disclosure directly on the HUBO subproblem. A reason for this is that the identification of the subproblems is simpler once the HUBO problem has been converted into one or more QUBO subproblems compared to the identification of the subproblems in the original HUBO problem.

A QUBO problem may be represented by the following equation:

$$f(\bar{x}) = \sum_{i=1}^{n} a_i \cdot x_i + \sum_{1 \le i < n, i < j \le n} b_{ij} \cdot x_i \cdot x_j$$

wherein:

$n$: is a natural number higher than two;

$a_i$ and $b_{ij}$: are coefficients of the QUBO problem; and

$\bar{x}$: is a vector comprising a plurality of variables ($x_1, x_2, ... , x_n$) of the QUBO problem, each variable of the plurality of variables only can have one of two values (e.g., zero or one, -1 or 1).

In particular:

$a_i$: is the coefficient, of the QUBO problem, associated with the variable $x_i$; and

$b_{ij}$: is the coefficient, of the QUBO problem, associated with the variables $x_i$ and $x_j$.

The QUBO problem is solved (or approximately solved) by finding appropriate values of the plurality of variables of the QUBO problem, for example, by finding values of the plurality of variables of the QUBO problem, the values minimizing a value of $f(\bar{x})$.

In some embodiments, the method comprises composing a solution or an approximate solution of the problem by using the solution values or approximate solution values of the variables of the isomorphic portion of the first subproblem and the solution values or the approximate solution values of the variables of the isomorphic portion of the second subproblem; the solution or approximate solution of the problem comprising the solution values or the approximate solution values of the variables of the isomorphic portion of the first subproblem and the solution values or the approximate solution values of the variables of the isomorphic portion of the second subproblem.

Thereby, the method allows composing a solution or an approximate solution of the problem by using the solution or approximate solution values of the variables of the isomorphic portions of the first and second subproblems previously obtained.

In some embodiments, each identified subproblem is representable by a graph having nodes and links joining the nodes, each node representing each variable of the plurality of variables of the respective subproblem and each link representing each coefficient of the plurality of coefficients of the respective subproblem and associated with the variable(s) of the node(s) linked by the link; wherein the step of identifying PUBO subproblems comprises identifying all PUBO subproblems (i.e., including the first and second subproblems) within the problem wherein for any first pair of subproblems of the identified all subproblems:

the graph of a subproblem of the first pair of subproblems is isomorphic, according to an isomorphism relation of the first pair of subproblems, with respect to the graph of an another subproblem of the first pair of subproblems or the graph of a subproblem of the first pair of subproblems is approximately isomorphic, according to an isomorphism relation of the first pair of subproblems, with respect to the graph of an another subproblem of the first pair of subproblems, and

each coefficient of at least two coefficients of the subproblem of the first pair of subproblems is proportional or approximately proportional to a coefficient of the another subproblem of the first pair of subproblems according to a same proportion ratio of the first pair of subproblems, each coefficient of the at least two coefficients of the subproblem of the first pair of subproblems proportional or approximately proportional, according to the proportion ratio of the first pair of subproblems, to the respective coefficient of the another subproblem is associated with one or more variables (preferably, the coefficient of the at least two coefficients is not associated with any other variable in addition to the one or more variables) represented by one or more nodes of the graph representing the subproblem of the first pair of subproblems isomorphic, according to the isomorphism relation of the first pair of subproblems, with respect to one or more nodes of the graph representing the another subproblem linked by the link representing the respective coefficient of the another subproblem.

In some embodiments, an isomorphic portion, according to the isomorphism relation of the first pair of subproblems, of the subproblem of the first pair of subproblems does not comprise any variable of an isomorphic portion, according to the isomorphism relation of the first pair of subproblems, of the another subproblem of the first pair of subproblems; and a total amount of variables of the isomorphic portion of the subproblem of the first pair of subproblems is equal to a total amount of variables of the isomorphic portion of the another subproblem of the first pair subproblem.

Thereby, by applying the isomorphisms of all the pair of subproblems to the solution or approximate solution values of the variables of the isomorphic portions of the respective graphs of the first pair of subproblems, solution values or approximate solution values of the variables of the isomorphic portions of the rest of the all identified subproblems may be obtained. Preferably, the application of the isomorphisms is performed by a classical computer (more preferably without quantum computing) so that use of quantum computing is minimized.

In some embodiments, the step of identifying polynomial unconstrained binary optimization subproblems comprises identifying a third polynomial unconstrained binary optimization subproblem being defined by a third plurality of coefficients and by a third plurality of variables, wherein the third subproblem is representable by a third graph having nodes and links joining the nodes, each node representing each variable of the third plurality of variables and each link representing each coefficient of the third plurality of coefficients and associated with the variable(s) of the node(s) linked by the link;

wherein the problem does not comprise a fourth polynomial unconstrained binary optimization subproblem being defined by a fourth plurality of coefficients and by a fourth plurality of variables, wherein the fourth subproblem is representable by a fourth graph having nodes and links joining the nodes, each node representing each variable of the fourth plurality of variables and each link representing each coefficient of the fourth plurality of coefficients and associated with the variable(s) of the node(s) linked by the link such that:

the third graph is isomorphic, according to a second isomorphism relation, with respect to the fourth graph or the third graph is approximately isomorphic, according to a second isomorphism relation, with respect to the fourth graph; each coefficient of at least two coefficients of the third plurality of coefficients is proportional or approximately proportional to a coefficient of the fourth plurality of coefficients according to a same second proportion ratio, each coefficient of the at least two coefficients proportional or approximately proportional, according to the second proportion ratio, to the respective coefficient of the fourth plurality of coefficients is associated with one or more variables (preferably, the coefficient of the at least two coefficients is not associated with any other variable in addition to the one or more variables) represented by one or more nodes of the third graph isomorphic, according to the second isomorphism relation, with respect to one or more nodes of the fourth graph linked by the link representing the respective coefficient of the fourth plurality of coefficients; and preferably, wherein an isomorphic portion of the third subproblem, according to the second isomorphism relation, does not comprise any variable of an isomorphic portion, according to the second isomorphism relation, of the fourth subproblem; wherein the isomorphic portion of the third subproblem comprises the at least two coefficients of the third plurality of coefficients; and wherein a total amount of variables of the isomorphic portion of the third subproblem is equal to a total amount of variables of the isomorphic portion of the fourth subproblem.

Therefore, solution values or approximate solution values of the third subproblem may not be obtained by applying any isomorphism to solution values or approximate solution values of any other subproblem within the problem.

In some embodiments, the third subproblem is solved, by a quantum computer, or approximately solved, by a quantum computer, thereby obtaining solution values or approximate solution values of the third plurality of variables. Since there is not any isomorphism relating the third subproblem to another subproblem within the problem, solving the third subproblem by using quantum computing may be advantageous for achieving solution or approximate solution values in quicker manner than with mere classical computing.

In some embodiments, the method comprises adjusting the polynomial unconstrained binary optimization problem by assigning the solution values or approximate solution values of the variables of the isomorphic portion of the first subproblem to respective variables of the problem and by assigning the solution values or approximate solution values of the variables of the isomorphic portion of the second subproblem to respective variables of the problem, thereby obtaining an adjusted polynomial unconstrained binary optimization problem.

Since the solution values (or approximate solution values) of the first plurality of variables (or at least of the variables of the isomorphic portion of the first subproblem) are obtained, and the solution values (or approximate solution values) of the first subproblem are a subset of solution values of the problem (in particular, the solution values of the first subproblem are values of a subset of the plurality of variables of the problem), the problem may be minimized (i.e., the number of variables for which a solution or approximated solution is to be calculated) by assigning, to respective variables of the problem, the solution values or approximate solution values of the variables of the isomorphic portion of the first subproblem. For similar reasons, the solution values or approximate solution values of the variables of the isomorphic portion of the second subproblem may be assigned to respective variables of the problem, allowing further minimization of the problem. Thereby, the size of the problem, and in particular the number of variables of the problem which values have to be optimized, is decreased. Therefore, fewer computing resources (in particular, quantum computing resources) are required to solve the adjusted problem in comparison with the computing resources required for solving the original problem.

In some embodiments, the method comprises:
identifying PUBO subproblems within the latest adjusted PUBO problem, a sum of the identified subproblems being the latest adjusted problem or a subproblem of the latest adjusted problem, the latest identified PUBO subproblems comprising:

a further PUBO subproblem being defined by a further plurality of coefficients and a further plurality of variables, and an another PUBO subproblem being defined by an another plurality of coefficients and an another plurality of variables;
wherein the further subproblem is representable by a further graph having nodes and links joining the nodes, each node representing each variable of the further plurality of variables and each link representing each coefficient of the further plurality of coefficients and associated with the variable(s) of the node(s) linked by the link;
wherein the another subproblem is representable by another graph having nodes and links joining the nodes, each node representing each variable of the another plurality of variables and each link representing each coefficient of the another plurality of coefficients and associated with the variable(s) of the node(s) linked by the link;
wherein the further graph is isomorphic, according to a latest isomorphism relation, with respect to the another graph or the further graph is approximately isomorphic, according to a latest isomorphism relation, with respect to the another graph;
wherein each coefficient of at least two coefficients of the further plurality of coefficients is proportional or approximately proportional to a coefficient of the another plurality of coefficients according to a same latest proportion ratio, each coefficient of the at least two coefficients of the further plurality of coefficients proportional or approximately proportional, according to the latest proportion ratio, to the respective coefficient of the another plurality of coefficients is associated with one or more variables (preferably, the coefficient of the at least two coefficients is not associated with any other variable in addition to the one or more variables) represented by one or more nodes of the further graph isomorphic, according to the latest isomorphism relation, with respect to one or more nodes of the another graph linked by the link representing the respective coefficient of the another plurality of coefficients;
storing the latest isomorphism relation;
sending an isomorphic portion, according to the latest isomorphism relation, of the further subproblem to a quantum computer, the isomorphic portion comprising the at least two coefficients of the further plurality of coefficients;
solving, by the quantum computer, or approximately solving, by the quantum computer, the isomorphic portion of the further subproblem thereby obtaining solution values or approximate solution values of the variables of the isomorphic portion of the further subproblem;
adjusting the latest adjusted problem by assigning the solution values or approximate solution values of the variables of the isomorphic portion of the further subproblem to respective variables of the latest adjusted problem and by assigning solution values or approximate solution values of the variables of the isomorphic portion of the another subproblem to respective variables of the latest adjusted problem; and
preferably, wherein the isomorphic portion of the further subproblem does not comprise any variable of an isomorphic portion, according to the latest isomorphism relation, of the another subproblem, and wherein a total amount of variables of the isomorphic portion of the further subproblem is equal to a total amount of variables of the isomorphic portion of the another subproblem.

In some embodiments, the method comprises repeating the steps of: identifying a further subproblem and an another subproblem within the latest adjusted problem, storing a latest isomorphism relation between the graph of the latest identified further subproblem and the graph of the latest identified another subproblem, sending an isomorphic portion, according to the latest isomorphism relation, of the latest identified further subproblem to the quantum computer, solving, by the quantum computer, or approximately solving, by the quantum computer, the isomorphic portion of the latest identified further subproblem and adjusting the latest adjusted problem by assigning the solution values or approximate solution values of the variables of the isomorphic portion of the latest identified further subproblem to respective variables of the latest adjusted problem and by assigning solution values or approximate solution values of the variables of an isomorphic portion, according to the latest isomorphism relation, of the latest identified another subproblem to respective variables of the latest adjusted problem.

Thereby, in each repetition, the size of the problem is reduced and the problem is partially solved (i.e., solution values of a subset of the plurality of variables of the problem are obtained in each repetition).

In some embodiments, the latest adjusted problem comprises PUBO subproblems which were not comprised by the problem adjusted previously to the latest adjusted problem. As solution values are assigned to variables of the problem, the problem changes (i.e., is adjusted), for example, because some coefficients may not be relevant anymore because a variable associated with said coefficient has been assigned the value zero. Thereby, new isomorphic portions of subproblems may be identified in each subsequent iteration.

In another example, the adjustment of the problem may comprise assigning a solution value or an approximate solution value to a variable (for example, assigning the value 1 to a variable), wherein the variable is associated with a coefficient and the coefficient is associated with another variable which solution value or approximate solution value has not been determined, and the coefficient is not associated with any other variable. In this case, the coefficient is integrated with the bias (i.e., the coefficient of the self-loop of the another variable) accordingly to the determined solution value or approximate solution value of the variable (in the example, since the solution value of the variable is 1, then the coefficient is summed to the bias).

In some embodiments, the step of repeating is performed until repeating a predetermined maximum number of times the group of the steps of: identifying a further subproblem and an another subproblem within the latest adjusted problem, storing a latest isomorphism relation between the graph of the latest identified further subproblem and the graph of the latest identified another subproblem, sending an isomorphic portion, according to the latest isomorphism relation, of the latest identified further subproblem to the quantum computer, solving, by the quantum computer, or approximately solving, by the quantum computer, the isomorphic portion of the latest identified further subproblem, and adjusting the latest adjusted problem by assigning the solution values or approximate solution values of the variables of the isomorphic portion of the latest identified further subproblem to respective variables of the latest adjusted problem and by assigning the solution values or approximate solution values of the variables of an isomorphic portion, according to the latest isomorphism relation, of the latest identified another subproblem to respective variables of the latest adjusted problem.

Therefore, the method is performed until a predetermined number of repetitions has been exceeded.

In some embodiments, the step of repeating is performed until the latest adjusted problem does not comprise:

any fifth PUBO subproblem being defined by a fifth plurality of coefficients and a fifth plurality of variables, and a sixth PUBO subproblem being defined by a sixth plurality of coefficients and a sixth plurality of variables;
wherein the fifth subproblem is representable by a fifth graph having nodes and links joining the nodes, each node representing each variable of the fifth plurality of variables and each link representing each coefficient of the fifth plurality of coefficients and associated with the variable(s) of the node(s) linked by the link;
wherein the sixth subproblem is representable by a sixth graph having nodes and links joining the nodes, each node representing each variable of the sixth plurality of variables and each link representing each coefficient of the sixth plurality of coefficients and associated with the variable(s) of the node(s) linked by the link;
wherein the fifth graph is isomorphic, according to a third isomorphism relation, with respect to the sixth graph or the fifth graph is approximately isomorphic, according to a third isomorphism relation, with respect to the sixth graph;
wherein each coefficient of at least two coefficients of the fifth plurality of coefficients is proportional or approximately proportional to a coefficient of the sixth plurality of coefficients according to a same third proportion ratio, each coefficient of the at least two coefficients of the fifth plurality of coefficients proportional or approximately proportional, according to the third proportion ratio, to the respective coefficient of the sixth plurality of coefficients is associated with one or more variables (preferably, the coefficient of the at least two coefficients is not associated with any other variable in addition to the one or more variables) represented by one or more nodes of the fifth graph isomorphic, according to the third isomorphism relation, with respect to one or more nodes of the sixth graph linked by the link representing the respective coefficient of the sixth plurality of coefficients; and
preferably, wherein an isomorphic portion, according to the third isomorphism relation, of the fifth subproblem does not comprise any variable of an isomorphic portion, according to the third isomorphism relation, of the sixth subproblem; wherein the isomorphic portion of the fifth subproblem comprises the at least two coefficients of the fifth plurality of coefficients; and wherein a total amount of variables of the isomorphic portion of the fifth subproblem is equal to a total amount of variables of the isomorphic portion of the sixth subproblem.

In some embodiments, the fifth subproblem is solved, by a quantum computer, or approximately solved, by a quantum computer, thereby obtaining solution values or approximate solution values of the fifth plurality of variables. Since there is not any isomorphism relating the fifth subproblem to another subproblem within the problem, solving the fifth subproblem by using quantum computing may be advantageous for achieving solution or approximate solution values in quicker manner than with mere classical computing.

Therefore, the method is performed until there are not any subproblems within the latest adjusted problem such that solution values or approximate solution values of the variables of one of the subproblems may be obtained by applying an isomorphism to solution values or approximate solution values of another subproblem.

In some embodiments, each identified subproblem is representable by a graph having nodes and links joining the nodes, each node representing each variable of the plurality of variables of the respective subproblem and each link representing each coefficient of the plurality of coefficients of the respective subproblem and associated with the variable(s) of the node(s) linked by the link; wherein each step of identifying polynomial unconstrained binary optimization subproblems within the latest adjusted polynomial unconstrained binary optimization problem comprises identifying all polynomial unconstrained binary optimization subproblems within the polynomial unconstrained binary optimization problem wherein for any second pair of subproblems of the identified all subproblems:

the graph of a subproblem of the second pair of subproblems is isomorphic, according to an isomorphism relation of the second pair of subproblems, with respect to the graph of an another subproblem of the second pair of subproblems or the graph of a subproblem of the second pair of subproblems is approximately isomorphic, according to an isomorphism relation of the second pair of subproblems, with respect to the graph of an another subproblem of the second pair of subproblems, and

each coefficient of at least two coefficients of the subproblem of the second pair of subproblems is proportional or approximately proportional to a coefficient of the another subproblem of the second pair of subproblems according to a same proportion ratio of the second pair of subproblems, each coefficient of the at least two coefficients of the subproblem of the second pair of subproblems proportional or approximately proportional, according to the proportion ratio of the second pair of subproblems, to the respective coefficient of the another subproblem is associated with one or more variables (preferably, the coefficient of the at least two coefficients is not associated with any other variable in addition to the one or more variables) represented by one or more nodes of the graph of the subproblem of the second pair of subproblems isomorphic, according to the isomorphism relation of the second pair of subproblems, with respect to one or more nodes of the graph of the another subproblem of the second pair of subproblems linked by the link representing the respective coefficient of the another subproblem of the second pair of subproblems.

In some embodiments, an isomorphic portion, according to the isomorphism relation of the second pair of subproblems, of the subproblem of the second pair of subproblems comprises the at least two coefficients of the subproblem of the second pair of subproblems and does not comprise any variable of an isomorphic portion, according to the isomorphism relation of the second pair of subproblems, of the another subproblem of the second pair of subproblems; and a total amount of variables of the isomorphic portion of the subproblem of the second pair of subproblems is equal to a total amount of variables of the isomorphic portion of the another subproblem of the second pair of subproblems.

In some embodiments, the step of solving or approximately solving of each step of repeating further comprises: solving or approximately solving the isomorphic portion of the latest identified another subproblem based on the latest isomorphism relation and on the solution values or approximate solution values of the variables of the isomorphic portion of the latest identified further subproblem.

In some embodiments, the problem is a QUBO problem, each identified further subproblem is a QUBO subproblem and each identified another subproblem is a QUBO subproblem.

A second aspect of the disclosure relates to a distributed computing environment comprising a classical computer (i.e., a digital computer) and a quantum computer, the computing environment being configured to identify PUBO subproblems within a PUBO problem, a sum of the identified PUBO subproblems being the problem or a subproblem of the problem, the PUBO subproblems comprising:

a first PUBO subproblem being defined by a first plurality of coefficients and a first plurality of variables, and

a second PUBO subproblem being defined by a second plurality of coefficients and a second plurality of variables, wherein the first subproblem is representable by a first graph having nodes and links joining the nodes, wherein each node of the first graph represents each variable of the first plurality of variables, and each link of the first graph represents each coefficient of the first plurality of coefficients and is associated with the variable(s) of the node(s) linked by the link;

wherein the second subproblem is representable by a second graph having nodes and links joining the nodes, wherein each node of the second graph represents each variable of the second plurality of variables, and each link of the second graph represents each coefficient of the second plurality of coefficients and is associated with the variable(s) of the node(s) linked by the link;

wherein the first graph is isomorphic, according to an isomorphism relation, with respect to the second graph or the first graph is approximately isomorphic, according to an isomorphism relation, with respect to the second graph,

wherein each coefficient of at least two coefficients of the first plurality of coefficients is proportional or approximately proportional to a coefficient of the second plurality of coefficients according to a same proportion ratio, each coefficient of the at least two coefficients of the first plurality of coefficients proportional or approximately proportional, according to the proportion ratio, to the respective coefficient of the second plurality of coefficients is associated with one or more variables (preferably, the coefficient of the at least two coefficients is not associated with any other variable in addition to the one or more variables) represented by one or more nodes of the first graph isomorphic, according to the isomorphism relation, with respect to one or more nodes of the second graph linked by the link representing the respective coefficient of the second plurality of coefficients;

the quantum computer is configured to receive an isomorphic portion, according to the isomorphism relation, of the first subproblem, the isomorphic portion comprising the at least two coefficients (e.g., the digital computer is configured to send the isomorphic portion of the first subproblem to the quantum computer);

the quantum computer is configured to solve or to approximately solve the isomorphic portion of the first subproblem thereby obtaining solution values or approximate solution values of the variables of the isomorphic portion of the first subproblem; and

preferably, wherein the isomorphic portion of the first subproblem does not comprise any variable of the isomorphic portion of the second subproblem, and wherein a total amount of variables of the isomorphic portion of the first subproblem is equal to a total amount of variables of the isomorphic portion of the second subproblem.

Similar advantages as those described with reference to the first aspect of the disclosure may also be applicable to the second aspect of the disclosure.

### BRIEF DESCRIPTION OF THE DRAWINGS

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:

Figure 1 diagrammatically shows a computing environment in accordance with embodiments.
Figure 2 shows a method in accordance with embodiments.
Figure 3 shows a method in accordance with embodiments.
Figure 4 shows a graph representing a subproblem.
Figure 5 shows a graph representing a subproblem.
Figure 6 shows a graph representing a subproblem.

### DESCRIPTION OF EMBODIMENTS

The following description is not to be taken in a limiting sense but is given solely for the purpose of describing the broad principles of the invention. Embodiments of the invention will be described by way of example, with reference to the above-mentioned drawings.

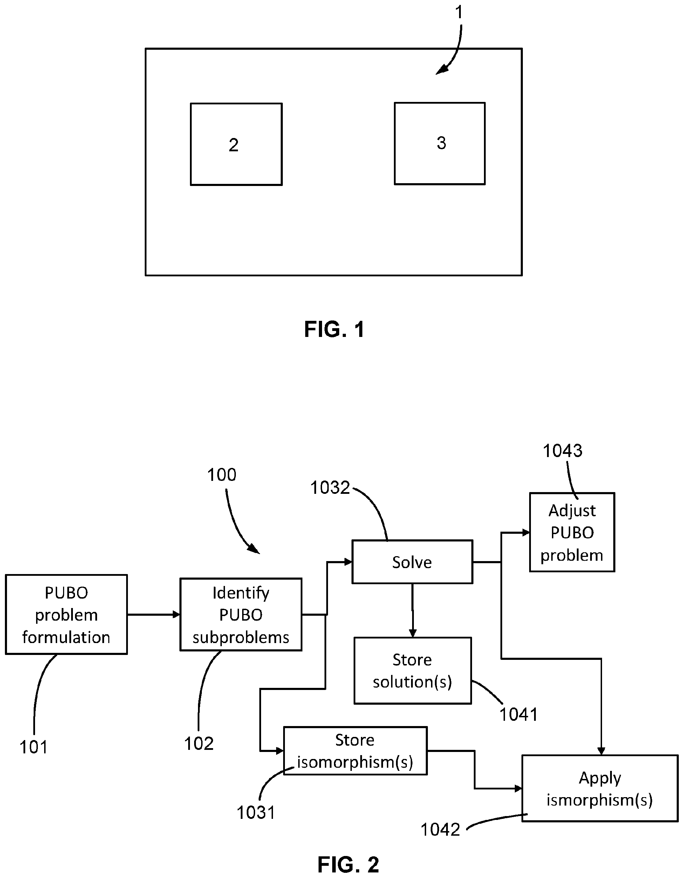

Figure 1 diagrammatically shows an example of a computing environment 1 which may perform methods of the disclosure. The computing environment comprises at least one quantum computer 2 and at least one classical computer 3. The at least one classical computer 3 performs classical computing (i.e., digital computing). The at least one classical computing device 3 may be, for example, a CPU, a GPU, an FPGA, an ASIC, a personal computer, a laptop, etc.

Figure 2 shows a first method 100. The first method 100 may be performed by the computing environment 1.

In the first method 100 a PUBO problem (e.g., a QUBO problem or a HUBO problem) is digitally formulated 101 in the computing environment 1, for example, by the at least one classical computer 3. The PUBO problem may be defined by more than one hundred, more than one thousand and/or more than one million coefficients; and more than one hundred, more than one thousand and/or more than one million variables. Therefore, solving the PUBO problem by mere classical computing may take too much time. In addition, embedding the whole PUBO problem in a quantum computer may not be possible due to limitations of the quantum computer.

A PUBO problem may be defined by the equation:

$$H(\bar{x}) = \sum_{i_1}^{n} J_{i_1} \cdot x_{i_1} + \sum_{i_1, i_2}^{n} J_{i_1 i_2} \cdot x_{i_1} \cdot x_{i_2} + ... + \sum_{i_1, ... i_k}^{n} J_{i_1 i_2 ... i_k} \cdot x_{i_1} \cdot x_{i_2} ... x_{i_k}$$

wherein:

$J_{i1}, J_{i1i2} ... J_{i1i2...ik}$ : are the coefficients of the PUBO problem;
$\bar{x}$: is a vector comprising the plurality of binary variables ($x_{i1}$, $x_{i2}$, ..., $x_{ik}$) of the PUBO problem; and
$n$: is a total number of the plurality of binary variables of the PUBO problem.

For the sake of simplicity of the description, hereinafter it is considered that the PUBO problem is a QUBO problem defined by the following equation:

$$f(\bar{x}) = \sum_{i=1}^{n} a_i \cdot x_i + \sum_{1 \le i < n, i < j \le n} b_{ij} \cdot x_i \cdot x_j$$

wherein:

$a_i$, $b_{ij}$: are the coefficients of the QUBO problem;
$\bar{x}$: is a vector comprising the plurality of binary variables ($x_1, x_2, \dots, x_n$) of the QUBO problem; and
$n$: is a total number of the plurality of variables of the QUBO problem.

In particular:

$a_i$: is the coefficient associated with the variable $x_i$; and
$b_{ij}$: is the coefficient associated with the variables $x_i$ and $x_j$.

Some QUBO problems may be decomposed into QUBO subproblems. For example, a QUBO problem may be decomposed in the following first QUBO subproblem and the following second QUBO subproblem:

$$f(x_1, x_2, \dots, x_n) = f_1(x_1, x_2, \dots, x_c) + f_2(x_{c-1}, x_c, \dots, x_d)$$

wherein:

$f_1(x_1, x_2, \dots, x_c)$: is the first QUBO subproblem; and
$f_2(x_{c-1}, x_c, \dots, x_d)$: is the second QUBO subproblem.

In some embodiments, the first QUBO subproblem may be defined by a first plurality of coefficients and by a first plurality of variables, for example, by the following equation:

$$f_1(x_1, x_2, \dots, x_c) = \sum_{i=1}^{c} a_i \cdot x_i + \sum_{1 \le i < c-1, i < j \le c-1} b_{ij} \cdot x_i \cdot x_j + \sum_{1 \le i < c-1, j=c} b_{ij} \cdot x_i \cdot x_j$$

wherein:

$a_i$, $b_{ij}$: are the first plurality of coefficients;
$x_1, \dots, x_c$: are the first plurality of variables (i.e., the variables of the first QUBO problem); and
$c$: is a total number of the first plurality of variables.

In some embodiments, the second QUBO subproblem may be defined by a second plurality of coefficients and by a second plurality of variables, for example, by the following equation:

$$f_2(x_{c-1}, x_c, x_{c+1}, \dots, x_d) = \sum_{i=c+1}^{d} a_i \cdot x_i + \sum_{c-1 \le i < d, i < j \le d} b_{ij} \cdot x_i \cdot x_j$$

wherein:

$a_i$, $b_{ij}$: are the second plurality of coefficients;
$x_{c-1}, \dots, x_d$: are the second plurality of variables (i.e., the variables of the second QUBO problem); and
$d - c + 2$: is a total number of the second plurality of variables.

In the previous example two variables (i.e., $x_{c-1}$ and $x_c$) are in the first subproblem and in the second subproblem.

In some examples, more or less than two variables may be in the first and in the second subproblem. In some examples, the variables in the first subproblem and in the second subproblem are not the latest variables of the first subproblem (e.g., may be $x_1$) and/or are not the initial variables of the second subproblem (e.g., may be $x_d$).

In step 102 of the first method 100, QUBO subproblems within the QUBO problem are identified. For the sake of simplicity, hereinafter it is considered that only two subproblems within the QUBO problem are identified. However, the skilled person understands that in some embodiments of the first method 100, more than two subproblems may be identified in the problem formulated in step 101.

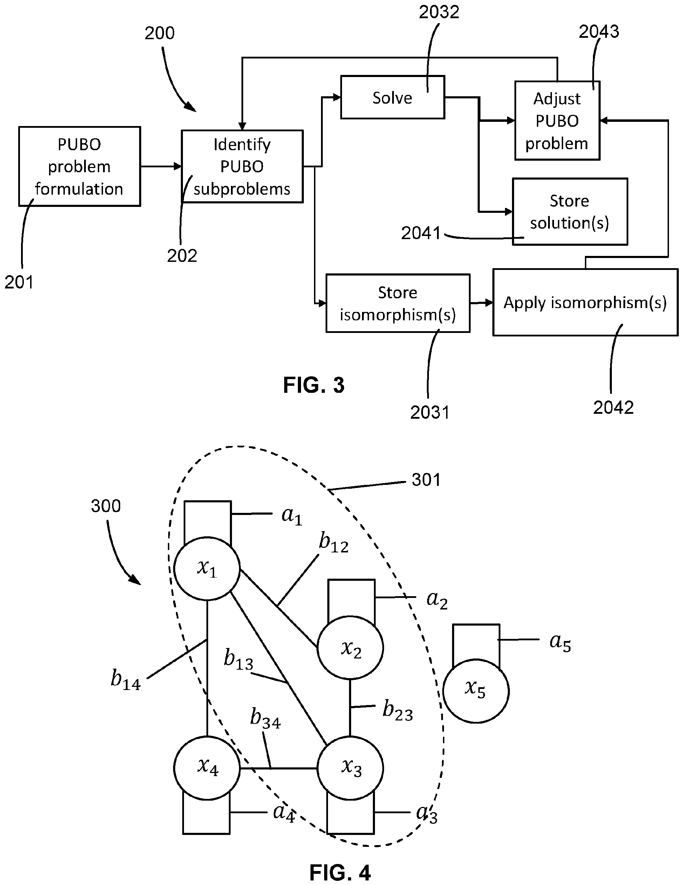

The first QUBO subproblem $f_1$ is representable by a first graph 300 as illustrated in figure 4. In particular, and for the sake of simplicity of the description, the first graph 300 of figure 4 represents the following particular example of the first subproblem:

$$f_1(x_1, x_2, x_3, x_4, x_5) = \sum_{i=1}^{5} a_i \cdot x_i + \sum_{1 \leq i < 4, i < j \leq 4} b_{ij} \cdot x_i \cdot x_j = \quad a_1 \cdot x_1 + a_2 \cdot x_2 + a_3 \cdot x_3 + a_4 \cdot$$

$$x_4 + a_5 \cdot x_5 + b_{12} \cdot x_1 \cdot x_2 + b_{13} \cdot x_1 \cdot x_3 + b_{14} \cdot x_1 \cdot x_4 + b_{23} \cdot x_2 \cdot x_3 + b_{34} \cdot x_3 \cdot x_4$$

The first graph 300 has one node for each variable of the first plurality of variables of the first QUBO subproblem. The first graph has one link (i.e., one edge) for each coefficient of the first plurality of coefficients of the first QUBO subproblem, wherein each link of the first subproblem links variable(s) multiplied by the coefficient represented by the respective link. Each coefficient multiplied by just one variable has been represented as a link starting and ending in the same node.

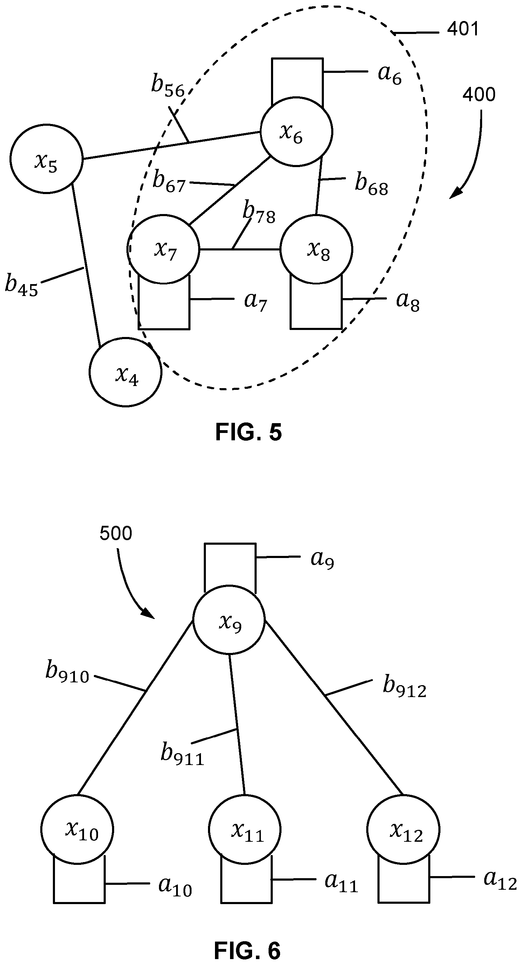

The second QUBO subproblem $f_2$ is representable by a second graph 400 as illustrated in figure 5. In particular, and for the sake of simplicity of the description, the second graph 400 of figure 5 represents the following particular example of the second subproblem:

$$f_2(x_4, x_5, x_6, x_7, x_8) = \sum_{i=6}^{8} a_i \cdot x_i + \sum_{4 \leq i < 8, i < j \leq 8} b_{ij} \cdot x_i \cdot x_j = \quad a_6 \cdot x_6 + a_7 \cdot x_7 + a_8 \cdot x_8 + b_{45} \cdot$$

$$x_4 \cdot x_5 + b_{56} \cdot x_5 \cdot x_6 + b_{67} \cdot x_6 \cdot x_7 + b_{68} \cdot x_6 \cdot x_8 + b_{78} \cdot x_7 \cdot x_8$$

The second graph 400 has one node for each variable of the second plurality of variables of the second QUBO subproblem. The second graph has one link (i.e., one edge) for each coefficient of the second plurality of coefficients of the second QUBO subproblem, wherein each link of the second subproblem links variable(s) multiplied by the coefficient represented by the respective link. Each coefficient multiplied by just one variable has been represented as a link starting and ending in the same node.

Since each coefficient of the coefficients $b_{14}$ and $b_{34}$ has a negligible value in comparison with values of the coefficients $a_1$, $a_2$, $a_3$, $b_{12}$, $b_{13}$ and $b_{23}$; variable $x_5$ is not linked to the variables $x_1$, $x_2$ and $x_3$; and each coefficient of the coefficients $b_{45}$ and $b_{56}$ has a negligible value in comparison with values of the coefficients $a_6$, $a_7$, $a_8$, $b_{67}$, $b_{68}$, $b_{78}$, the first graph 300 is approximately isomorphic, according to a first isomorphism relation, with respect to the second graph 400. In particular, the nodes representing the variables $x_1$, $x_2$ and $x_3$ are isomorphic, according to the first isomorphism relation, with respect to the nodes representing the variables $x_7$, $x_6$ and $x_8$ respectively.

In addition, each coefficient of at least two coefficients of the first plurality of coefficients is proportional or approximately proportional to a coefficient of the second plurality of coefficients according to a same first proportion ratio, each coefficient of the at least two coefficients of the first plurality of coefficients proportional or approximately proportional, according to the first proportion ratio, to the respective coefficient of the second plurality of coefficients is associated with one or more variables represented by one or more nodes of the first graph isomorphic, according to the first isomorphism relation, with respect to one or more nodes of the second graph linked by the link representing the respective coefficient of the second plurality of coefficients. In particular:

$$a_7 \approx k \cdot a_1$$

$$a_6 \approx k \cdot a_2$$

$$a_8 \approx k \cdot a_3$$

$$b_{67} \approx k \cdot b_{12}$$

$$b_{78} \approx k \cdot b_{13}$$

$$b_{68} \approx k \cdot b_{23}$$

wherein k is a real number.

In this way:

- a solution value of variable $x_1$ is approximately equal to a solution value of variable $x_7$;
- a solution value of variable $x_2$ is approximately equal to a solution value of variable $x_6$; and
- a solution value of variable $x_3$ is approximately equal to a solution value of variable $x8$.

Therefore, each coefficient of at least two coefficients of the first plurality of coefficients (in particular, each coefficient of the coefficients $a_1$, $a_2$, $a_3$) is proportional or approximately proportional to a coefficient of the second plurality of coefficients according to a same first proportion ratio (in particular, the real number $k$), each coefficient of the at least two coefficients of the first plurality of coefficients proportional or approximately proportional, according to the first proportion ratio, to the respective coefficient of the second plurality of coefficients is associated with one or more variables represented by one or more nodes of the first graph isomorphic, according to the first isomorphism relation, with respect to one or more nodes of the second graph linked by the link representing the respective coefficient of the second plurality of coefficients.

Thereby, approximate solution values of variables $x_7$, $x_6$ and $x_8$ may be obtained by using the first isomorphism relation and solution values or approximate solution values of variables $x_1$, $x_2$ and $x_3$.

In step 1031 of the first method 100, the first isomorphism relation is stored. The first isomorphism relation may be stored in, for example, a memory (e.g., a memory of the at least one classical computing device 3). In some embodiments, more than two subproblems are identified in step 102 and more isomorphism relations may be stored in step 1031 (e.g., an isomorphism relation between an identified subproblem other than the first and second subproblems with respect to the first subproblem, or an isomorphism relation between an identified subproblem other than the first and second subproblems with respect to another identified subproblem other than the first and second subproblems).

In step 1032 of the first method 100, the isomorphic portion, according to the first isomorphism relation, of the first subproblem is solved by the at least one quantum computer 2 (e.g., by applying quantum annealing). Thereby, solution values of variables $x_1$, $x_2$ and $x_3$ are obtained. In some embodiments, more than two subproblems are identified in step 102 and the at least one quantum computer 2 solves isomorphic portions of several subproblems of the subproblems identified in step 102 (e.g., portions of subproblems which do not have any isomorphism relation between any pair of said portions). The isomorphic portion of the first subproblem has been referenced as 301 in figure 4 and is given by:

$$a_1 \cdot x_1 + a_2 \cdot x_2 + a_3 \cdot x_3 + b_{12} \cdot x_1 \cdot x_2 + b_{13} \cdot x_1 \cdot x_3 + b_{23} \cdot x_2 \cdot x_3$$

In step 1041 of the first method 100, the solution values obtained in step 1032 are stored in, for example, a memory (e.g., a memory of the at least one classical computing device 3). In some embodiments, the at least one quantum computer 2 solves or approximately solves several portions of subproblems; the solutions or approximate solutions obtained by the at least one quantum computer 2 are stored in, for example, a memory (e.g., a memory of the at least one classical computing device 3).

In step 1042 of the first method 100, the first isomorphism relation is applied, by the at least one classical computer 3, to the solution values obtained in step 1032, thereby obtaining solution values of the variables $x_7$, $x_6$ and $x_8$. In some embodiments, more than two subproblems are identified in step 102 and several isomorphism relations are applied to the solution values obtained in step 1032, thereby obtaining solution values of portions of several subproblems.

In step 1043 of the first method 100, the QUBO problem is adjusted by assigning the solution values or approximate solution values of the variables of the isomorphic portion of the first subproblem to respective variables of the problem and by assigning the solution values or approximate solution values of the variables of the isomorphic portion of the second subproblem to respective variables of the problem, thereby obtaining an adjusted QUBO problem. Continuing with the previous example where $f = f_1(x_1, x_2, x_3, x_4, x_5) + f_2(x_4, x_5, x_6, x_7, x_8)$.

$$f_{adjusted} = a_4 \cdot x_4 + a_5 \cdot x_5 + b_{14} \cdot S_1 \cdot x_4 + b_{34} \cdot S_3 \cdot x_4 + b_{45} \cdot x_4 \cdot x_5 + b_{56} \cdot x_5 \cdot S_6 + R$$

wherein:

$S_1$: is the obtained solution value of $x_1$,

$S_3$: is the obtained solution value of $x_3$,

$S_6$: is the obtained solution value of $x_6$, and

R: is an optional summand (optional in the sense that the solution values of the remaining variables of $f_{adjusted}$ may be the same if the summand R is removed from $f_{adjusted}$) which results from summing $a_1 \cdot S_1 + a_2 \cdot S_2 + a_3 \cdot S_3 + b_{12} \cdot S_1 \cdot S_2 + b_{13} \cdot S_1 \cdot S_3 + b_{23} \cdot S_2 \cdot S_3 + a_6 \cdot S_6 + a_7 \cdot S_7 + a_8 \cdot S_8 + b_{67} \cdot S_6 \cdot S_7 + b_{68} \cdot S_6 \cdot S_8 + b_{78} \cdot S_7 \cdot S_8$, wherein:

$S_2$: is the obtained value of $x_2$,

$S_7$: is the obtained value of $x_7$, and

$S_8$: is the obtained value of $x_8$.

Thereby reducing the QUBO problem.

In some embodiments in which isomorphic portions of several subproblems are solved or approximately solved in step 1032, the QUBO problem is adjusted by assigning the solution values or approximate solution values of the variables of an isomorphic portion of a subproblem to respective variables of the QUBO problem, thereby transforming the summands, of the QUBO problem, comprising the respective variables into constants. In some embodiments in which several isomorphisms are applied in step 1042, the QUBO problem is adjusted by assigning the solution values or approximate solution values obtained in step 1042 to respective variables of the QUBO problem.

A solution or approximate solution of the QUBO problem comprises the solution values or approximate solution values of the isomorphic portion of the first subproblem and the solution values or approximate solution values of the isomorphic portion of the second subproblem. Thereby, the solution or approximate solution of the QUBO problem may be composed by using the solution values obtained in the method 100.

In some embodiments, step 102 of the first method 100 comprises identifying a third QUBO subproblem being defined by a third plurality of coefficients and by a third plurality of variables, wherein the third subproblem is representable by a third graph having nodes and links joining the nodes, each node representing each variable of the third plurality of variables and each link representing each coefficient of the third plurality of coefficients and associated with the variable(s) of the node(s) linked by the link;

wherein the problem does not comprise a fourth polynomial unconstrained binary optimization subproblem being defined by a fourth plurality of coefficients and by a fourth plurality of variables, wherein the fourth subproblem is representable by a fourth graph having nodes and links joining the nodes, each node representing each variable of the fourth plurality of variables and each link representing each coefficient of the fourth plurality of coefficients and associated with the variable(s) of the node(s) linked by the link such that:

the third graph is isomorphic, according to a second isomorphism relation, with respect to the fourth graph or the third graph is approximately isomorphic, according to a second isomorphism relation, with respect to the fourth graph; and each coefficient of at least two coefficients of the third plurality of coefficients is proportional or approximately proportional to a coefficient of the fourth plurality of coefficients according to a same second proportion ratio, each coefficient of the at least two coefficients proportional or approximately proportional, according to the second proportion ratio, to the respective coefficient of the fourth plurality of coefficients is associated with one or more variables represented by one or more nodes of the third graph isomorphic, according to the second isomorphism relation, with respect to one or more nodes of the fourth graph linked by the link representing the respective coefficient of the fourth plurality of coefficients.

For example, the following subproblems may be identified in a QUBO problem:

- the first subproblem $f_1(x_1, x_2, x_3, x_4, x_5)$;
- the second subproblem $f_2(x_4, x_5, x_6, x_7, x_8)$;
- the third subproblem $f_3(x_9, x_{10}, x_{11}, x_{12}) = a_9 \cdot x_9 + a_{10} \cdot x_{10} + a_{11} \cdot x_{11} + a_{12} \cdot x_{12} + b_{910} \cdot x_9 \cdot x_{10} + b_{911} \cdot x_9 \cdot x_{11} + b_{912} \cdot x_9 \cdot x_{12}$ depicted in figure 6.

Since the coefficients $a_9$, $a_{10}$, $a_{11}$, $a_{12}$, $b_{910}$, $b_{911}$ and $b_{912}$ have approximately the same value and in view of the structure of the third graph with respect to the structure of first and the second graph, the third graph 500 is not isomorphic, according to any isomorphism relation, with respect to the first graph 300 nor with respect to the second graph 400. In addition, since the third graph is not approximately isomorphic with respect to the first graph 300 nor with respect to the second graph 400, unlike solution values of the variables of the isomorphic portion of the second subproblem, solution values of the variables of the third subproblem may not be obtained by applying an isomorphism to the solution values of the variables of the isomorphic portion of the first subproblem.

In some embodiments, step 102 comprises identifying all QUBO subproblems within the QUBO problem wherein for any first pair of subproblems of the identified all subproblems:

the graph of a subproblem of the first pair of subproblems is isomorphic, according to an isomorphism relation of the first pair of subproblems, with respect to the graph of an another subproblem of the first pair of subproblems or the graph of a subproblem of the first pair of subproblems is approximately isomorphic, according to an isomorphism relation of the first pair of subproblems, with respect to the graph of an another subproblem of the first pair of subproblems, and

each coefficient of at least two coefficients of the subproblem of the first pair of subproblems is proportional or approximately proportional to a coefficient of the another subproblem of the first pair of subproblems according to a same proportion ratio of the first pair of subproblems, each coefficient of the at least two coefficients of the subproblem of the first pair of subproblems proportional or approximately proportional, according to the proportion ratio of the first pair of subproblems, to the respective coefficient of the another subproblem is associated with one or more variables represented by one or more nodes of the graph representing the subproblem of the first pair of subproblems isomorphic, according to the isomorphism relation of the first pair of subproblems, with respect to one or more nodes of the graph representing the another subproblem linked by the link representing the respective coefficient of the another subproblem;

wherein an isomorphic portion of the subproblem of the first pair of subproblems does not comprise any variable of the isomorphic portion of the another subproblem of the first pair of subproblems; the isomorphic portion of the subproblem of the first pair of subproblems comprising the at least two coefficients of the subproblem of the first pair of subproblems; and wherein a total amount of variables of the isomorphic portion of the subproblem of the first pair of subproblems is equal to a total amount of variables of the isomorphic portion of the another subproblem of the first pair subproblem.

In this way, all subproblems, within the QUBO problem, being representable with a graph isomorphic or approximately isomorphic with respect to the graph of one of the all subproblems and meeting the aforementioned proportionality condition of the coefficients are identified. Therefore, solution values or approximate solution values of an isomorphic portion of any subproblem of the all subproblems may be obtained based on an isomorphism relation and solution values of an isomorphic portion of another of the all subproblems.

Figure 3 illustrates a second method 200. The second method 200 may be performed by the computing environment 1.

In the second method 200 a PUBO problem (e.g., a QUBO problem or a HUBO problem) is digitally formulated 201 in the computing environment 1, for example, by the at least one classical computer 3. For the sake of simplicity of the description, hereinafter it is considered that the PUBO problem is a QUBO problem.

The second method 200 is an iterative method wherein steps 202, 2031, 2032, 2041, 2042 and 2043 are repeated. In an initial performance in the method 200 of the previous steps:

- step 202 may be equal to step 102;
- step 2031 may be equal to step 1031;
- step 2032 may be equal to step 1032;
- step 2042 may be equal to step 1042;
- step 2041 may be equal to step 1041; and
- step 2043 may be equal to step 1043.

In some embodiments, in the initial performance of step 102, the identified subproblems are the subproblems having isomorphic portions comprising variables associated with the highest impact values of the problem. Thereby, the method 200 obtains, at a relatively early stage, solution values or approximate solution values of variables which have a relatively high impact on the problem.

In some embodiments, it takes too much time and/or computing resources to calculate the exact impact values of the variables. Therefore, it is advantageous to merely calculate the impact values in a heuristic manner.

After adjusting the QUBO problem in step 2043, a subsequent iteration of step 202 is performed (for example, by the at least one classical computer 3) to identify QUBO subproblems within the latest adjusted QUBO problem.

In the subsequent iteration of step 202, the identified QUBO subproblems (i.e., the latest identified QUBO subproblems) may comprise:

a further QUBO subproblem being defined by a further plurality of coefficients and a further plurality of variables, and an another QUBO subproblem being defined by an another plurality of coefficients and an another plurality of variables;

wherein the further subproblem is representable by a further graph having nodes and links joining the nodes, each node representing one variable of the further plurality of variables and each link representing one coefficient of the further plurality of coefficients and associated with the variable(s) of the node(s) linked by the link;

wherein the another subproblem is representable by another graph having nodes and links joining the nodes, each node representing one variable of the another plurality of variables and each link representing each coefficient of the another plurality of coefficients and associated with the variable(s) of the node(s) linked by the link;

wherein the further graph is isomorphic, according to a latest isomorphism relation, with respect to the another graph or the further graph is approximately isomorphic, according to a latest isomorphism relation, with respect to the another graph;

wherein each coefficient of at least two coefficients of the further plurality of coefficients is proportional or approximately proportional to a coefficient of the another plurality of coefficients according to a same latest proportion ratio, each coefficient of the at least two coefficients of the further plurality of coefficients proportional or approximately proportional, according to the latest proportion ratio, to the respective coefficient of the another plurality of coefficients is associated with one or more variables (preferably, the coefficient of the at least two coefficients is not associated with any other variable in addition to the one or more variables) represented by one of more nodes of the further graph isomorphic, according to the latest isomorphism relation, with respect to one or more nodes of the another graph linked by the link representing the respective coefficient of the another plurality of coefficients;

wherein an isomorphic portion of the further subproblem does not comprise any variable of an isomorphic portion of the another subproblem; wherein the isomorphic portion of the further subproblem comprises the at least two coefficients of the further plurality of coefficients; and wherein a total amount of variables of the isomorphic portion of the further subproblem is equal to a total amount of variables of the isomorphic portion of the another subproblem.

In some embodiments, in the subsequent iteration of step 202, the latest identified QUBO subproblems may comprise all QUBO subproblems within the QUBO problem wherein for any second pair of subproblems of the identified all subproblems:

the graph of a subproblem of the second pair of subproblems is isomorphic, according to an isomorphism relation of the second pair of subproblems, with respect to the graph of an another subproblem of the second pair of subproblems or the graph of a subproblem of the second pair of subproblems is approximately isomorphic, according to an isomorphism relation of the second pair of subproblems, with respect to the graph of an another subproblem of the second pair of subproblems,

each coefficient of at least two coefficients of the subproblem of the second pair of subproblems is proportional or approximately proportional to a coefficient of the another subproblem of the second pair of subproblems according to a same proportion ratio of the second pair of subproblems, each coefficient of the at least two coefficients of the subproblem of the second pair of subproblems proportional or approximately proportional, according to the proportion ratio of the second pair of subproblems, to the respective coefficient of the another subproblem is associated with one or more variables, of the subproblem of the second pair of subproblems, isomorphic, according to the isomorphism relation of the second pair of subproblems, with respect to the one or more variables, of the another subproblem, associated with the respective coefficient of the another subproblem of the second pair of subproblems, and

wherein the isomorphic portion of the subproblem of the second pair of subproblems does not comprise any variable of the isomorphic portion of the another subproblem of the second pair of subproblems, and wherein a total amount of variables of the isomorphic portion of the subproblem of the second pair of subproblems is equal to a total amount of variables of the isomorphic portion of the another subproblem of the second pair of subproblems.

For the sake of simplicity of the description, hereinafter it is considered that in the subsequent iteration of step 202, the latest identified QUBO subproblems are the further subproblem and the another subproblem.

In a subsequent iteration of step 2031, the latest isomorphism relation is stored. The isomorphism relation may be stored in, for example, a memory (e.g., a memory of the at least one classical computing device 3). In some embodiments, more than two subproblems are identified in the subsequent iteration of step 2031 and more isomorphism relations may be stored in step 2031 (e.g., an isomorphism relation between an identified subproblem other than the further and another subproblems with respect to the further or another subproblem).

In the subsequent iteration of step 2032, the isomorphic portion, according to the latest isomorphism relation, of the further subproblem is solved by the at least one quantum computer 2. In some embodiments, more than two subproblems are identified in the subsequent iteration of step 202 and the at least one quantum computer 2 solves isomorphic portions of several subproblems of the subproblems identified in the subsequent iteration of step 202 (e.g., portions of subproblems which do not have any isomorphism relation between any pair of the portions).

In the subsequent iteration of step 2041, the solution values obtained in the subsequent iteration of step 2032 are stored in, for example, a memory (e.g., a memory of the at least one classical computing device 3). In some embodiments, the at least one quantum computer 2 solves or approximately solves several portions of subproblems; the solutions or approximate solutions obtained by the at least one quantum computer 2 are stored in, for example, a memory (e.g., a memory of the at least one classical computing device 3).

In the subsequent iteration of step 2042, the isomorphic portion of the another subproblem is solved or approximately solved (by, for example, the at least one classical computer 3) based on the solution values obtained in the subsequent iteration of step 2032 and on the latest isomorphism relation stored in the subsequent iteration of step 2031.

In some embodiments in which more than two subproblems are identified in the subsequent iteration of step 202, several isomorphic portions of the latest identified subproblems are solved or approximately solved (by, for example, the at least one classical computer 3) based on the solution values obtained in the subsequent iteration of step 2032 and on isomorphism relations stored in the subsequent iteration of step 2031.

In the subsequent iteration of step 2043, the QUBO problem is adjusted by assigning the solution values or approximate solution values of the variables of the isomorphic portion of the further subproblem to respective variables of the problem and by assigning the solution values or approximate solution values of the variables of the isomorphic portion of the another subproblem to respective variables of the problem, thereby obtaining a latest adjusted QUBO problem. Thereby, in each iteration, a total size of the latest adjusted QUBO problem is decreased.

In some embodiments, the step of repeating is performed until the earliest of:

- repeating a predetermined maximum number of times the group of the steps of: identifying a further subproblem and an another subproblem within the latest adjusted problem, storing a latest isomorphism relation between the graph of the latest identified further subproblem and the graph of the latest identified another subproblem, sending an isomorphic portion, according to the latest isomorphism relation, of the latest identified further subproblem to the quantum computer, solving, by a quantum computer, or approximately solving, by a quantum computer, the isomorphic portion of the latest identified further subproblem, and adjusting the latest adjusted problem by assigning the solution values or approximate solution values of the variables of the isomorphic portion of the latest identified further subproblem to respective variables of the latest adjusted problem and by assigning the solution values or approximate solution values of the variables of the isomorphic portion of the latest identified another subproblem to respective variables of the latest adjusted problem; and

- the latest adjusted problem does not comprise:

  any fifth polynomial unconstrained binary optimization subproblem being defined by a fifth plurality of coefficients and a fifth plurality of variables, and
  a sixth polynomial unconstrained binary optimization subproblem being defined by a sixth plurality of coefficients and a sixth plurality of variables;

  wherein the fifth subproblem is representable by a fifth graph having nodes and links joining the nodes, each node representing each variable of the fifth plurality of variables and each link representing each coefficient of the fifth plurality of coefficients and associated with the variable(s) of the node(s) linked by the link;
  wherein the sixth subproblem is representable by a sixth graph having nodes and links joining the nodes, each node representing each variable of the sixth plurality of variables and each link representing each coefficient of the sixth plurality of coefficients and associated with the variable(s) of the node(s) linked by the link;
  wherein the fifth graph is isomorphic, according to a third isomorphism relation, with respect to the sixth graph or the fifth graph is approximately isomorphic, according to a third isomorphism relation, with respect to the sixth graph; and
  wherein each coefficient of at least two coefficients of the fifth plurality of coefficients is proportional or approximately proportional to a coefficient of the sixth plurality of coefficients according to a same third proportion ratio, each coefficient of the at least two coefficients of the fifth plurality of coefficients proportional or approximately proportional, according to the third proportion ratio, to the respective coefficient of the sixth plurality of coefficients is associated with one or more variables (preferably, the coefficient of the at least two coefficients is not associated with any other variable in addition to the one or more variables) represented by one or more nodes of the fifth graph isomorphic, according to the third isomorphism relation, with respect to one or more nodes of the sixth graph linked by the link representing the respective coefficient of the sixth plurality of coefficients; and
  wherein an isomorphic portion of the fifth subproblem, according to the third isomorphism relation, does not comprise any variable of an isomorphic portion, according to the third isomorphism relation, of the sixth subproblem; wherein the isomorphic portion of the fifth graph comprises the at least two coefficients of the fifth plurality of coefficients; and wherein a total amount of variables of the isomorphic portion of the fifth subproblem is equal to a total amount of variables of the isomorphic portion of the sixth subproblem.

When an ordinal number (such as "first", "second", "third" and so on) is used as an adjective before a term, that ordinal number is used (unless expressly specified otherwise) merely to indicate a particular feature, such as to distinguish that particular feature from another feature that is described by the same term or by a similar term. For example, a "first widget" may be so named merely to distinguish it from, e.g., a "second widget". Thus, the mere usage of the ordinal numbers "first" and "second" before the term "widget" does not indicate any other relationship between the two widgets, and likewise does not indicate any other characteristics of either or both widgets. For example, the mere usage of the ordinal numbers "first" and "second" before the term "widget" (1) does not indicate that either widget comes sequentially before or after any other in order or location; (2) does not indicate that either widget occurs or acts before or after any other in time; and (3) does not indicate that either widget ranks above or below any other, as in importance or quality. In addition, the mere usage of ordinal numbers does not define a numerical limit to the features identified with the ordinal numbers. For example, the mere usage of the ordinal numbers "first" and "second" before the term "widget" does not indicate that there must be no more than two widgets.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method comprising:

identifying polynomial unconstrained binary optimization subproblems within a polynomial unconstrained binary optimization problem, a sum of the identified subproblems being the problem or a subproblem of the problem, the identified polynomial unconstrained binary optimization subproblems comprising:

a first polynomial unconstrained binary optimization subproblem being defined by a first plurality of coefficients and a first plurality of variables, and
a second polynomial unconstrained binary optimization subproblem being defined by a second plurality of coefficients and a second plurality of variables,

wherein the first subproblem is representable by a first graph (300) having nodes ($x_1$, $x_2$, $x_3$, $x_4$, $x_5$) and links ($a_1$, $a_2$, $a_3$, $a_4$, $a_5$, $b_{12}$, $b_{13}$, $b_{14}$, $b_{23}$, $b_{34}$) joining the nodes, wherein each node of the first graph represents each variable of the first plurality of variables, and each link of the first graph represents each coefficient of the first plurality of coefficients and is associated with the variable(s) of the node(s) linked by the link;
wherein the second subproblem is representable by a second graph (400) having nodes ($x_4$, $x_5$, $x_6$, $x_7$, $x_8$) and links ($a_6$, $a_7$, $a_8$, $b_{67}$, $b_{68}$, $b_{78}$, $b_{45}$, $b_{56}$) joining the nodes, wherein each node of the second graph represents each variable of the second plurality of variables, and each link of the second graph represents each coefficient of the second plurality of coefficients and is associated with the variable(s) of the node(s) linked by the link;
wherein the first graph is isomorphic, according to a first isomorphism relation, with respect to the second graph or the first graph is approximately isomorphic, according to a first isomorphism relation, with respect to the second graph;
wherein each coefficient ($a_1$, $a_2$, $a_3$, $b_{12}$, $b_{13}$, $b_{23}$) of at least two coefficients of the first plurality of coefficients is proportional or approximately proportional to a coefficient ($a_7$, $a_6$, $a_8$, $b_{67}$, $b_{78}$, $b_{68}$) of the second plurality of coefficients according to a same first proportion ratio, each coefficient of the at least two coefficients proportional or approximately proportional, according to the first proportion ratio, to the respective coefficient of the second plurality of coefficients is associated with one or more variables ($x_1$, $x_2$, $x_3$) represented by one or more nodes of the first graph isomorphic, according to the first isomorphism relation, with respect to one or more nodes of the second graph linked by the link representing the respective coefficient of the second plurality of coefficients;
sending an isomorphic portion, according to the first isomorphism relation, of the first subproblem to a quantum computer, the isomorphic portion comprising the at least two coefficients; and
solving, by the quantum computer, or approximately solving, by the quantum computer, the isomorphic portion (301) of the first subproblem thereby obtaining solution values or approximate solution values of the variables ($x_1$, $x_2$, $x_3$) of the isomorphic portion of the first subproblem.

2. The method of claim 1, wherein the isomorphic portion of the first subproblem does not comprise any variable of an isomorphic portion, according to the first isomorphism relation, of the second subproblem, and wherein a total amount of variables of the isomorphic portion of the first subproblem is equal to a total amount of variables of the isomorphic portion of the second subproblem.

3. The method of claim 1 or 2, the method comprising solving or approximately solving the isomorphic portion (401) of the second subproblem based on the first isomorphism relation and on the solution values or approximate solution values of the variables of the isomorphic portion of the first subproblem thereby obtaining solution values or approximate solution values of the variables of the isomorphic portion of the second subproblem.

4. The method of claim 3, the method comprising composing a solution or an approximate solution of the problem by using the solution values or approximate solution values of the variables of the isomorphic portion of the first subproblem and the solution values or the approximate solution values of the variables of the isomorphic portion of the second subproblem; the solution or approximate solution of the problem comprising the solution values or approximate solution values of the variables of the isomorphic portion of the first subproblem and the solution values or the approximate solution values of the variables of the isomorphic portion of the second subproblem.

5. The method of any one of the preceding claims, wherein each identified subproblem is representable by a graph having nodes and links joining the nodes, each node representing each variable of the plurality of variables of the respective subproblem and each link representing each coefficient of the plurality of coefficients of the respective subproblem and associated with the variable(s) of the node(s) linked by the link; wherein the step of identifying polynomial unconstrained binary optimization subproblems comprises identifying all polynomial unconstrained binary optimization subproblems within the problem wherein for any first pair of subproblems of the identified all subproblems:

the graph of a subproblem of the first pair of subproblems is isomorphic, according to an isomorphism relation of the first pair of subproblems, with respect to the graph of an another subproblem of the first pair of subproblems or the graph of a subproblem of the first pair of subproblems is approximately isomorphic, according to an isomorphism relation of the first pair of subproblems, with respect to the graph of an another subproblem of the first pair of subproblems; and
each coefficient of at least two coefficients of the subproblem of the first pair of subproblems is proportional or approximately proportional to a coefficient of the another subproblem of the first pair of subproblems according to a same proportion ratio of the first pair of subproblems, each coefficient of the at least two coefficients of the subproblem of the first pair of subproblems proportional or approximately proportional, according to the proportion ratio of the first pair of subproblems, to the respective coefficient of the another subproblem is associated with one or more variables represented by one or more nodes of the graph representing the subproblem of the first pair of subproblems isomorphic, according to the isomorphism relation of the first pair of subproblems, with respect to one or more nodes of the graph representing the another subproblem linked by the link representing the respective coefficient of the another subproblem.

6. The method of any one of the preceding claims, wherein the step of identifying polynomial unconstrained binary optimization subproblems comprises identifying a third polynomial unconstrained binary optimization subproblem being defined by a third plurality of coefficients and by a third plurality of variables, wherein the third subproblem is representable by a third graph (500) having nodes ($x_9$, $x_{10}$, $x_{11}$, $x_{12}$) and links ($a_9$, $a_{10}$, $a_{11}$, $a_{12}$ $b_{910}$, $b_{911}$, $b_{912}$) joining the nodes, each node representing each variable of the third plurality of variables and each link representing each coefficient of the third plurality of coefficients and associated with the variable(s) of the node(s) linked by the link; wherein the problem does not comprise a fourth polynomial unconstrained binary optimization subproblem being defined by a fourth plurality of coefficients and by a fourth plurality of variables, wherein the fourth subproblem is representable by a fourth graph having nodes and links joining the nodes, each node representing each variable of the fourth plurality of variables and each link representing each coefficient of the fourth plurality of coefficients and associated with the variable(s) of the node(s) linked by the link such that:

the third graph is isomorphic, according to a second isomorphism relation, with respect to the fourth graph or the third graph is approximately isomorphic, according to a second isomorphism relation, with respect to the fourth graph; and
each coefficient of at least two coefficients of the third plurality of coefficients is proportional or approximately proportional to a coefficient of the fourth plurality of coefficients according to a same second proportion ratio, each coefficient of the at least two coefficients proportional or approximately proportional, according to the second proportion ratio, to the respective coefficient of the fourth plurality of coefficients is associated with one or more variables represented by one or more nodes of the third graph isomorphic, according to the second isomorphism relation, with respect to one or more nodes of the fourth graph linked by the link representing the respective coefficient of the fourth plurality of coefficients.

7. The method of any one of the preceding claims, wherein the polynomial unconstrained binary optimization problem is a quadratic unconstrained binary optimization problem, the first subproblem is a quadratic unconstrained binary optimization subproblem and the second subproblem is a quadratic unconstrained binary optimization subproblem.

8. The method of any one of the preceding claims, the method comprising adjusting the polynomial unconstrained binary optimization problem by assigning the solution values or approximate solution values of the variables of the isomorphic portion of the first subproblem to respective variables of the problem and by assigning the solution values or approximate solution values of the variables of the isomorphic portion of the second subproblem to respective variables of the problem, thereby obtaining an adjusted polynomial unconstrained binary optimization problem.

9. The method of claim 8, the method comprising:

identifying polynomial unconstrained binary optimization subproblems within the latest adjusted polynomial unconstrained binary optimization problem, a sum of the identified subproblems being the latest adjusted problem or a subproblem of the latest adjusted problem, the latest identified polynomial unconstrained binary optimization subproblems comprising:

a further polynomial unconstrained binary optimization subproblem being defined by a further plurality of coefficients and a further plurality of variables, and
an another polynomial unconstrained binary optimization subproblem being defined by an another plurality of coefficients and an another plurality of variables;

wherein the further subproblem is representable by a further graph having nodes and links joining the nodes, each node representing each variable of the further plurality of variables and each link representing each coefficient of the further plurality of coefficients and associated with the variable(s) of the node(s) linked by the link;
wherein the another subproblem is representable by another graph having nodes and links joining the nodes, each node representing each variable of the another plurality of variables and each link representing each coefficient of the another plurality of coefficients and associated with the variable(s) of the node(s) linked by the link;
wherein the further graph is isomorphic, according to a latest isomorphism relation, with respect to the another graph or the further graph is approximately isomorphic, according to a latest isomorphism relation, with respect to the another graph;
wherein each coefficient of at least two coefficients of the further plurality of coefficients is proportional or approximately proportional to a coefficient of the another plurality of coefficients according to a same latest proportion ratio, each coefficient of the at least two coefficients of the further plurality of coefficients proportional or approximately proportional, according to the latest proportion ratio, to the respective coefficient of the another plurality of coefficients is associated with one or more variables represented by one or more nodes of the further graph isomorphic, according to the latest isomorphism relation, with respect to one or more nodes of the another graph linked by the link representing the respective coefficient of the another plurality of coefficients;
storing the latest isomorphism relation;
sending an isomorphic portion, according to the latest isomorphism relation, of the further subproblem to a quantum computer, the isomorphic portion comprising the at least two coefficients of the further plurality of coefficients;
solving, by the quantum computer, or approximately solving, by the quantum computer, the isomorphic portion of the further subproblem thereby obtaining solution values or approximate solution values of the variables of the isomorphic portion of the further subproblem; and
adjusting the latest adjusted problem by assigning the solution values or approximate solution values of the variables of the isomorphic portion of the further subproblem to respective variables of the latest adjusted problem and by assigning solution values or approximate solution values of the variables of the isomorphic portion of the another subproblem to respective variables of the latest adjusted problem.

10. The method of claim 9, the method comprising repeating the steps of: identifying a further subproblem and an another subproblem within the latest adjusted problem, storing a latest isomorphism relation between the graph of the latest identified further subproblem and the graph of the latest identified another subproblem, sending an isomorphic portion, according to the latest isomorphism relation, of the latest identified further subproblem to the quantum computer, solving, by the quantum computer, or approximately solving, by the quantum computer, the isomorphic portion of the latest identified further subproblem and adjusting the latest adjusted problem by assigning the solution values or approximate solution values of the variables of the isomorphic portion of the latest identified further subproblem to respective variables of the latest adjusted problem and by assigning solution values or approximate solution values of the variables of an isomorphic portion, according to the latest isomorphism relation, of the latest identified another subproblem to respective variables of the latest adjusted problem.

11. The method of claim 10, the step of repeating being performed until repeating a predetermined maximum number of times the group of the steps of: identifying a further subproblem and an another subproblem within the latest adjusted problem, storing a latest isomorphism relation between the graph of the latest identified further subproblem and the graph of the latest identified another subproblem, sending an isomorphic portion, according to the latest isomorphism relation, of the latest identified further subproblem to the quantum computer, solving, by the quantum computer, or approximately solving, by the quantum computer, the isomorphic portion of the latest identified further subproblem, and adjusting the latest adjusted problem by assigning the solution values or approximate solution values of the variables of the isomorphic portion of the latest identified further subproblem to respective variables of the latest adjusted problem and by assigning the solution values or approximate solution values of the variables of an isomorphic portion, according to the latest isomorphism relation, of the latest identified another subproblem to respective variables of the latest adjusted problem.

12. The method of claim 10, the step of repeating being performed until the latest adjusted problem does not comprise:

   any fifth polynomial unconstrained binary optimization subproblem being defined by a fifth plurality of coefficients and a fifth plurality of variables, and
   a sixth polynomial unconstrained binary optimization subproblem being defined by a sixth plurality of coefficients and a sixth plurality of variables;
   wherein the fifth subproblem is representable by a fifth graph having nodes and links joining the nodes, each node representing each variable of the fifth plurality of variables and each link representing each coefficient of the fifth plurality of coefficients and associated with the variable(s) of the node(s) linked by the link;
   wherein the sixth subproblem is representable by a sixth graph having nodes and links joining the nodes, each node representing each variable of the sixth plurality of variables and each link representing each coefficient of the sixth plurality of coefficients and associated with the variable(s) of the node(s) linked by the link;
   wherein the fifth graph is isomorphic, according to a third isomorphism relation, with respect to the sixth graph or the fifth graph is approximately isomorphic, according to a third isomorphism relation, with respect to the sixth graph; and
   wherein each coefficient of at least two coefficients of the fifth plurality of coefficients is proportional or approximately proportional to a coefficient of the sixth plurality of coefficients according to a same third proportion ratio, each coefficient of the at least two coefficients of the fifth plurality of coefficients proportional or approximately proportional, according to the third proportion ratio, to the respective coefficient of the sixth plurality of coefficients is associated with one or more variables represented by one or more nodes of the fifth graph isomorphic, according to the third isomorphism relation, with respect to one or more nodes of the sixth graph linked by the link representing the respective coefficient of the sixth plurality of coefficients.

13. The method of any one of claims 9 to 12, wherein each identified subproblem is representable by a graph having nodes and links joining the nodes, each node representing each variable of the plurality of variables of the respective subproblem and each link representing each coefficient of the plurality of coefficients of the respective subproblem and associated with the variable(s) of the node(s) linked by the link; wherein each step of identifying polynomial unconstrained binary optimization subproblems within the latest adjusted polynomial unconstrained binary optimization problem comprises identifying all polynomial unconstrained binary optimization subproblems within the polynomial unconstrained binary optimization problem wherein for any second pair of subproblems of the identified all subproblems:
   the graph of a subproblem of the second pair of subproblems is isomorphic, according to an isomorphism relation of the second pair of subproblems, with respect to the graph of an another subproblem of the second pair of subproblems or the graph of a subproblem of the second pair of subproblems is approximately isomorphic, according to an isomorphism relation of the second pair of subproblems, with respect to the graph of an another subproblem of the second pair of subproblems, and

each coefficient of at least two coefficients of the subproblem of the second pair of subproblems is proportional or approximately proportional to a coefficient of the another subproblem of the second pair of subproblems according to a same proportion ratio of the second pair of subproblems, each coefficient of the at least two coefficients of the subproblem of the second pair of subproblems proportional or approximately proportional, according to the proportion ratio of the second pair of subproblems, to the respective coefficient of the another subproblem is associated with one or more variables represented by one or more nodes of the graph of the subproblem of the second pair of subproblems isomorphic, according to the isomorphism relation of the second pair of subproblems, with respect to one or more nodes of the graph of the another subproblem of the second pair of subproblems linked by the link representing the respective coefficient of the another subproblem of the second pair of subproblems.

14. The method of any one of claims 9 to 13, the step of solving or approximately solving of each step of repeating further comprising:
    solving or approximately solving the isomorphic portion of the latest identified another subproblem based on the latest isomorphism relation and on the solution values or approximate solution values of the variables of the isomorphic portion of the latest identified further subproblem.

15. A distributed computing environment comprising a classical computer and a quantum computer, the computing environment being configured to identify polynomial unconstrained binary optimization subproblems within a polynomial unconstrained binary optimization problem, a sum of the identified subproblems being the problem or a subproblem of the problem, the polynomial unconstrained binary optimization subproblems comprising:

    a first polynomial unconstrained binary optimization subproblem being defined by a first plurality of coefficients and a first plurality of variables, and
    a second polynomial unconstrained binary optimization subproblem being defined by a second plurality of coefficients and a second plurality of variables,
    wherein the first subproblem is representable by a first graph (300) having nodes ($x_1$, $x_2$, $x_3$, $x_4$, $x_5$) and links ($a_1$, $a_2$, $a_3$, $a_4$, $a_5$, $b_{12}$, $b_{13}$, $b_{14}$, $b_{23}$; $b_{34}$) joining the nodes, wherein each node of the first graph represents each variable of the first plurality of variables, and each link of the first graph represents each coefficient of the first plurality of coefficients and is associated with the variable(s) of the node(s) linked by the link;
    wherein the second subproblem is representable by a second graph (400) having nodes ($x_4$, $x_5$, $x_6$, $x_7$, $x_8$) and links ($a_6$, $a_7$, $a_8$, $b_{67}$, $b_{68}$, $b_{78}$, $b_{45}$, $b_{56}$) joining the nodes, wherein each node of the second graph represents each variable of the second plurality of variables, and each link of the second graph represents each coefficient of the second plurality of coefficients and is associated with the variable(s) of the node(s) linked by the link;
    wherein the first graph is isomorphic, according to an isomorphism relation, with respect to the second graph or the first graph is approximately isomorphic, according to an isomorphism relation, with respect to the second graph,
    wherein each coefficient ($a_1$, $a_2$, $a_3$, $b_{12}$, $b_{13}$, $b_{23}$) of at least two coefficients of the first plurality of coefficients is proportional or approximately proportional to a coefficient ($a_7$, $a_6$, $a_8$, $b_{67}$, $b_{78}$, $b_{68}$) of the second plurality of coefficients according to a same proportion ratio, each coefficient of the at least two coefficients of the first plurality of coefficients proportional or approximately proportional, according to the proportion ratio, to the respective coefficient of the second plurality of coefficients is associated with one or more variables ($x_4$, $x_2$, $x_3$) represented by one or more nodes of the first graph isomorphic, according to the isomorphism relation, with respect to one or more nodes of the second graph linked by the link representing the respective coefficient of the second plurality of coefficients;
    the quantum computer is configured to receive an isomorphic portion, according to the isomorphism relation, of the first subproblem, the isomorphic portion comprising the at least two coefficients; and
    the quantum computer is configured to solve or to approximately solve the isomorphic portion (301) of the first subproblem thereby obtaining solution values or approximate solution values of the variables ($x_4$, $x_2$, $x_3$) of the isomorphic portion of the first subproblem.

**FIG. 1**

**FIG. 2**

200

2032

2043

201

PUBO
problem
formulation

202

Identify
PUBO
subproblems

Solve

Adjust
PUBO
problem

Store
solution(s)

2041

Store
isomorphism(s)

Apply isomorphism(s)

**FIG. 3**

2031

2042

300

301

$a_1$

$b_{12}$

$x_1$

$a_2$

$x_2$

$a_5$

$b_{14}$

$b_{13}$

$x_5$

$b_{23}$

$b_{34}$

$x_4$

$x_3$

$a_4$

$a_3$

**FIG. 4**

**FIG. 5**

**FIG. 6**

| | Europäisches Patentamt European Patent Office Office européen des brevets | **EUROPEAN SEARCH REPORT** | Application Number EP 23 38 3074 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/152289 A1 (1QB INF TECH INC [CA]) 14 September 2017 (2017-09-14) * abstract; claims 1-34; figures 4,6 * * paragraph [0004] - paragraph [0073] * | 1-15 | INV. G06N10/60 |
| A | GIAN GIACOMO GUERRESCHI: "Solving Quadratic Unconstrained Binary Optimization with divide-and-conquer and quantum algorithms", ARXIV.ORG, CORNELL UNIVERSITY LIBRARY, 201 OLIN LIBRARY CORNELL UNIVERSITY ITHACA, NY 14853, 19 January 2021 (2021-01-19), XP081863248, * page 1 - page 14, paragraph 3 * | 1-15 | |
| A | ROMAN BARTÁK ET AL: "Compiling planning into quantum optimization problems: a comparative study", PROC. OF THE WORKSHOP ON CONSTRAINT SATISFACTION TECHNIQUES FOR PLANNING AND SCHEDULING PROBLEMS (COPLAS-15), 7 June 2015 (2015-06-07), pages 11-20, XP055413683, * page 11 - page 19, right-hand column, paragraph 2 * | 1-15 | |

| | | | TECHNICAL FIELDS SEARCHED (IPC) |
|---|---|---|---|
| | | | G06N |

The present search report has been drawn up for all claims

| Place of search | Date of completion of the search | Examiner |
|---|---|---|
| The Hague | 5 March 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 542 458 A1

## ANNEX TO THE EUROPEAN SEARCH REPORT
## ON EUROPEAN PATENT APPLICATION NO.

EP 23 38 3074

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2024

| Patent document cited in search report | Publication date | Patent family member(s) | | Publication date |
|---|---|---|---|---|
| WO 2017152289 A1 | 14-09-2017 | CA | 3017275 A1 | 14-09-2017 |
| | | EP | 3427196 A1 | 16-01-2019 |
| | | EP | 4036708 A1 | 03-08-2022 |
| | | JP | 6966177 B2 | 10-11-2021 |
| | | JP | 2019513276 A | 23-05-2019 |
| | | US | 2019019103 A1 | 17-01-2019 |
| | | WO | 2017152289 A1 | 14-09-2017 |

EPO FORM P0459

For more details about this annex : see Official Journal of the European Patent Office, No. 12/82

33